(19) **Europäisches Patentamt / European Patent Office / Office européen des brevets**

(11) **EP 2 544 044 B1**

(12) **EUROPEAN PATENT SPECIFICATION**

(45) Date of publication and mention
of the grant of the patent:
**17.09.2014 Bulletin 2014/38**

(51) Int Cl.:
*G02F 1/13357* (2006.01)　*G02B 6/00* (2006.01)
*F21V 8/00* (2006.01)　*G02F 1/1335* (2006.01)

(21) Application number: **12006572.7**

(22) Date of filing: **26.02.2008**

(54) **Backlight system and optical sheet with pressure-sensitive adhesive**

Rücklichtsystem und optische Folie mit Kleber

Système de rétroéclairage et feuille optique avec adhésif

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **28.02.2007　JP 2007049883**
**05.02.2008　JP 2008025416**

(43) Date of publication of application:
**09.01.2013 Bulletin 2013/02**

(62) Document number(s) of the earlier application(s) in
accordance with Art. 76 EPC:
**08712007.7 / 2 028 412**

(73) Proprietor: **Nitto Denko Corporation**
**Osaka 567-8680 (JP)**

(72) Inventors:
　• **Moroishi, Yutaka**
　　**Ibaraki-shi**
　　**Osaka, 567-8680 (JP)**
　• **Tominaga, Takashi**
　　**Ibaraki-shi**
　　**Osaka, 567-8680 (JP)**
　• **Hotta, Yuji**
　　**Ibaraki-shi**
　　**Osaka, 567-8680 (JP)**

(74) Representative: **Grünecker, Kinkeldey,
Stockmair & Schwanhäusser
Anwaltssozietät
Leopoldstrasse 4
80802 München (DE)**

(56) References cited:
**EP-A1- 1 729 155**　　**JP-A- 11 133 419**
**JP-A- 2001 312 915**　**JP-A- 2003 202 568**
**JP-A- 2005 344 014**　**JP-A- 2006 342 258**
**JP-A- 2007 023 225**　**US-A1- 2006 268 200**
**US-A1- 2007 013 648**　**US-A1- 2007 031 660**

**Description**

TECHNICAL FIELD

The present invention relates to a constitution of a light source (backlight system) for efficiently outgoing light, and an optical sheet with a pressure-sensitive adhesive which is used in the backlight system. By using the backlight system and the optical sheet with a pressure-sensitive adhesive of the invention, it is possible to efficiently outgo light by sticking on an adherend for outgoing light the optical sheet with a pressure-sensitive adhesive which includes an optical adhesive layer having little total reflection of light at the interface with the optical member, excellent adhesiveness and cohesion, and in long term durability. Such a technique also contributes to energy saving and long term of life.

BACKGROUND ART

In optical equipments such as TVs, monitors, playing machines, and portable telephones, outgoing light from the surface directly influences brightness of the image plane. Therefore, improvement of the luminance greatly affects appearance such as brightness and contrast. Further, when outgoing light is used for illumination, the luminance thereof directly influences brightness, and there is an advantage of energy saving such that a current value can be reduced by using the light having high luminance.

For the purpose of uniformly outgoing the light of such a light source, various trials have been done such as the design of a light guiding plate, the designs, forms and arrangements of illuminants themselves such as a cold fluorescent tube and an LED. Further, contrivances have been taken to emit light with the electric power as low as possible (for example, patent documents 1 and 2). Additionally, various contrivances have been made such as uniform outgoing light and improvement of luminance with a diffusing plate for diffusing light and optical films such as a retroreflective plate on a light guiding plate.

However, also in commercially available monitors, a light diffusion plate for uniforming the light which is coming from a light guiding plate which came together with a light source is merely put on the light guiding plate (e.g., patent documents 1 and 2). It is confirmed that since a thin layer of air is naturally present between the light guiding plate and the light diffusion plate, the loss of light occurs due to the air layer. In order to remove the loss, contrivances have been done to exclude the air layer by surface treatment of the light guiding plate per se to give a diffusing function to the layer or by applying matching oil between the light guiding plate and the light diffusion plate. However, the change in the product such as the big increase in processes and the size in scale are difficult to cope with in the former case, and it has been found that a problem such that leakage of liquid occurs due to the heat of the light source in the latter case.

It is known to fix a light guiding plate and a prism sheet through a pressure-sensitive adhesive (e.g., patent documents 3 to 6). However, when an adherend (for example, a light guiding plate) including a polyester resin or a polycarbonate resin is joined with an acrylic pressure-sensitive adhesive, there has been a problem of the occurrence of cells at the interface between the adherend and the pressure-sensitive adhesive. This is considered due to the fact that the water content and the like in the resin such as polymethyl methacrylate or polycarbonate resin used in the light guiding plate volatilizes by the influence of heat due to lighting of the backlight to generate cells at the interface between the pressure-sensitive adhesive layer and the light guiding plate.

Pressure-sensitive adhesives capable of resolving this problem are not known until now and, for example, there are disclosed in patent documents 3 to 6 that a light guiding plate and a prism sheet and a lens sheet are adhered with a transparent pressure-sensitive adhesive (a double-sided pressure-sensitive adhesive tape is also possible). However, detailed description in connection with pressure-sensitive adhesives is not found, so that it is unclear that what a kind of pressure-sensitive adhesive can be used.

Patent documents 7 and 8 disclose the surface light sources including a directional light diffusing film which is stuck to a light guiding plate or a prism sheet with a light diffusing pressure-sensitive adhesive. Further, ordinary manufacturing methods of the light diffusing pressure-sensitive adhesive are also disclosed in these documents. However, there is no description about the problem of generation of cells at the interface. Due to the above problem, there are no examples hitherto of sticking an optical film on a light guiding plate with a pressure-sensitive adhesive even when various kinds of liquid crystal monitors and liquid crystal TVs are disassembled, and that an optical film is put on a light guiding plate is the present situation. The countermeasures of the above problem are not described in these patent documents at all, and what a kind of pressure-sensitive adhesive can be used is unknown.

Patent Document 1: JP-A-2006-179494

Patent Document 2: JP-A-11-288614

Patent Document 3: JP-A-10-301109

Patent Document 4: JP-A-11-109344

Patent Document 5: JP-A-11-110131

Patent Document 6: JP-A-11-133419

Patent Document 7: JP-A-2005-044744

Patent Document 8: JP-A-2005-050654

JP 2003 202568 relates to a lightguide, its manufacturing method, surface-like light source and a display device, and discloses the features of the preamble of claim 1.

DISCLOSURE OF THE INVENTION

In order to cope with the above-mentioned problem, the object of the invention is to provide an optical sheet according to claim 1 and a backlight system capable of efficiently outgoing light and contributing to energy saving and long term of life according to claim 8.

Another object is to provide an image display according to claim 12 and an illuminating system according to claim 13 using the above-mentioned backlight system.

Further object of the invention is to provide a backlight system according to claim 8 capable of efficiently outgoing light and contributing to energy saving and long term of life by a constitution including an adherend for outgoing light, and an optical sheet according to claim 1 with a pressure-sensitive adhesive which is stuck on the adherend and has an optical pressure-sensitive adhesive layer which is not accompanied by generation of foaming at the interface even when used as resins used as ordinary light guiding plates such as polymethyl methacrylate resins and polycarbonate resins; and provide the optical sheet with a pressure-sensitive adhesive for use in the backlight system. A still further object is to provide an image display according to claim 12 and an illuminating system according to claim 13 using the above-mentioned backlight system.

A still yet further object of the invention is to provide a process for producing a backlight system according to claim 14 capable of efficiently outgoing light and contributing to energy saving and long term of life by a constitution including an adherend for outgoing light, comprising an optical sheet with a pressure-sensitive adhesive which is stuck on the adherend and has an optical pressure-sensitive adhesive layer having little total reflection of light at the interface with the optical member, excellent adhesiveness and cohesion, and in long term durability.

A yet further object of the invention is to provide a method for improving the luminance of outgoing light according to claim 15 using the above-mentioned backlight system capable of efficiently outgoing light by sticking to the adherend and contributing to energy saving and long term of life.

As a result of eager examination to achieve the above objects, the present inventors have found that the above objects can be achieved by the following backlight system and the optical sheet with a pressure-sensitive adhesive for use in the backlight system, thus the invention has been completed.

Namely, the invention provides a backlight system according to claim 8.

The invention has found that excellent improving effect of luminance as above can be exhibited by joining the optical film according to claim 1, which is a microlens and/or a light diffusing plate subjected to embossing or roughening processing treatment (e.g., 10 and 12) and an adherend for outgoing light (e.g., 30) through pressure-sensitive adhesive layer 20.

The optical films in the invention include other film-like forms such as an optical tape and an optical sheet.

Further, the adherend is a light source, a light guide member or a light source unit.

Further, the optical film is a microlens and/or a light diffusing plate.

Further, the optical film can be a laminate of optical films of a plurality of layers.

A storage elastic modulus of the pressure-sensitive adhesive layer at 23°C is preferably 10,000 to 1,000,000 Pa.

A refractive index of the adherend is preferably smaller than a refractive index of the pressure-sensitive adhesive layer, and a refractive index of the pressure-sensitive adhesive layer is preferably smaller than a refractive index of the optical film.

A refractive index of the pressure-sensitive adhesive layer is preferably 1.50 or more.

An image display and the illuminating system in the invention include the above-mentioned backlight system.

On the other hand, the optical sheet with a pressure-sensitive adhesive in the invention has a feature that the pressure-sensitive adhesive layer is laminated on the outermost layer of the optical film which is used in the backlight system.

The (meth)acrylic polymer is a modified (meth)acrylic polymer obtained by further copolymerizing a high refractive index monomer to the (meth)acrylic polymer copolymerized with 0.1 to 20 wt% of a nitrogen-containing monomer, 0.1 to 5 wt% of a carboxyl group-containing monomer and 0.1 to 10 wt% of a hydroxyl group-containing monomer.

The pressure-sensitive adhesive composition can further includes 0.01 to 2 parts by weight of a silane coupling agent based on 100 parts by weight of the (meth)acrylic polymer.

The (meth)acrylic polymer is preferably further copolymerized with 50 to 99 wt% of n-butyl (meth)acrylate.

The pressure-sensitive adhesive layer is preferably a pressure-sensitive adhesive layer containing light transmitting non-colored particles dispersed therein to thereby show a light diffusing property.

A thickness of the pressure-sensitive adhesive layer is preferably 2 to 500 $\mu$m.

On the other hand, a process for producing the backlight system in the invention including joining the adherend for outgoing light and the optical film subjected to embossing or roughening processing treatment so as to increase the surface area thereof, through the pressure-sensitive adhesive layer.

A method for improving the luminance of outgoing light includes using the above-mentioned backlight system.

The backlight system and the optical sheet with a pressure-sensitive adhesive which is used in the backlight system of the invention are, as described above, greatly improved in luminance by sticking the opposite side (the side which is not subjected to roughening treatment) to the side of the optical film having been subjected to embossing or roughening processing treatment so as to increase the surface area of the microlens and the light diffusing plate on the light guiding plate for outgoing the light from the illuminant, a sealing member or a light source unit through a pressure-sensitive adhesive. Further, the technique contributes to energy saving and long term of life.

As the pressure-sensitive adhesive composition (the pressure-sensitive adhesive layer) which is used in the invention, ordinarily used acrylic pressure-sensitive adhesives may be used for their transparency and excellent durability. However, the effect of further improvement of luminance can be revealed when pressure-sensitive adhesives having a high refractive index are used. Although the reason for exhibition of the effect of high improvement is not clear, as the refractive indexes of optical members, the refractive index of glass is 1.50 to 1.55, that of polycarbonate is 1.54, and that of triacetyl cellulose is 1.50, and these are greatly different from 1.47 of acrylic pressure-sensitive adhesive. Therefore, there is great difference in the refractive index at the interface between the optical members and the acrylic pressure-sensitive adhesive. It is presumed that the phenomenon that total reflection of light occurs when light is subjected to incidence at a shallow angle and the effective utilization of light is prevented can be effectively reduced by the great difference in refractive index. Incidentally, the measuring wavelength of refractive indexes is 589 nm.

On the other hand, the process for producing the backlight system in the invention including joining the adherend for outgoing light and the optical film subjected to embossing or roughening processing treatment so as to increase the surface area thereof, through the pressure-sensitive adhesive layer. The backlight system greatly increased in luminance of outgoing light can be easily manufactured by this process.

The method of improving the luminance of outgoing light includes the backlight system, and the luminance of outgoing light can be greatly improved very easily.

BRIEF DESCRIPTION OF DRAWING

Fig. 1 is a cross-sectional view showing an embodiment of the backlight system of the invention.
Fig. 2 is a cross-sectional view showing another embodiment of the backlight system of the invention.
Fig. 3 is a cross-sectional view showing a still another embodiment of the backlight system of the invention.
Fig. 4 is a cross-sectional view showing a yet still another embodiment of the backlight system of the invention.
Fig. 5 is a cross-sectional view showing a further embodiment of the backlight system of the invention.
Fig. 6 is a cross-sectional view showing an embodiment of illuminating system of the invention.

Description of Reference Numerals and Signs

1: Laminated optical film
10: Microlens sheet
12: Diffusing sheet
14: Luminance improving film
20: Pressure-sensitive adhesive layer
3: Light source unit
30: Light guide member
32: Light-emitting device (light source)

40: Pressure-sensitive adhesive layer
50: Liquid crystal module
6: Backlight system

## BEST MODE FOR CARRYING OUT THE INVENTION

The embodiment for carrying out the invention will be described in detail below with reference to the accompanying drawings.

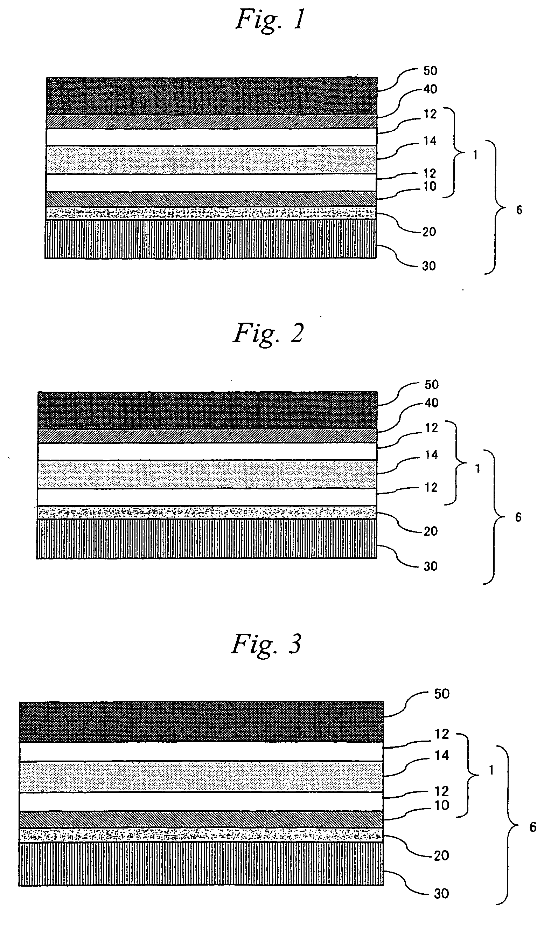

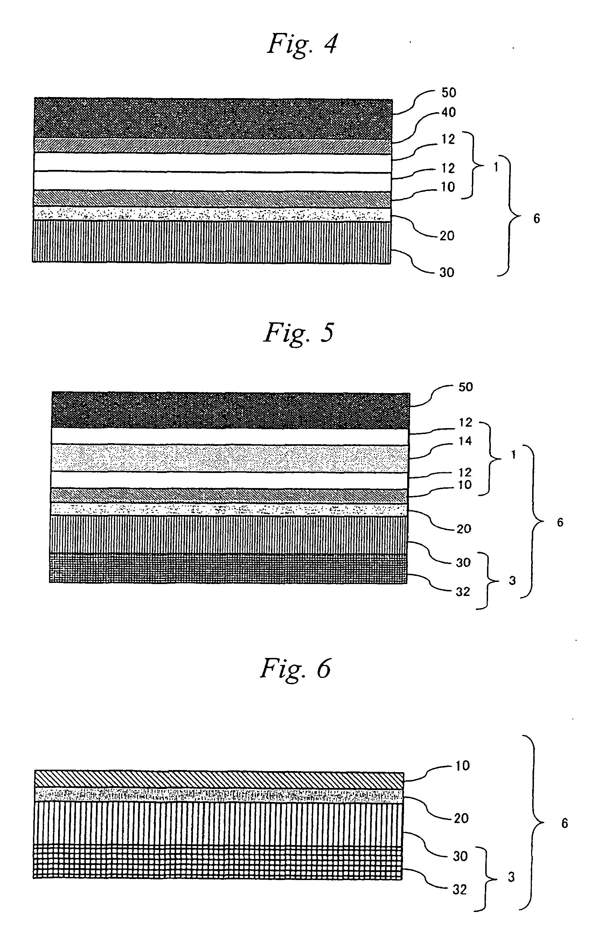

As shown in Figs. 1 to 5, backlight system 6 in the invention includes the adherend (e.g., 30) for outgoing light and the optical film having been subjected to embossing or roughening processing treatment so as to increase the surface area (e.g., 10 and 12), in which the adherend and the optical film are joined through the pressure-sensitive adhesive layer 20. Further, the illuminating system in the invention can be used as an illuminating system as it is according to the constitution shown in Fig. 6 as an example.

As the above-mentioned adherend, for example, a light source, a light guide member, and a light source unit may be mentioned. Of these, light source 32, light guide member 30, or light source unit 3 is preferred.

As the above-mentioned light source, for example, PDP fluorescent material, LED fluorescent material, organic EL, cold fluorescent tube, and a laser light source may be mentioned, and great effect can be observed with any of these light sources. Although it is possible to directly stick an optical sheet on these light sources through a pressure-sensitive adhesive layer, constitutions integrating these light sources, for example, backlights of liquid crystal televisions and monitors having surfaces of a glass plate and an acryl plate, light guiding plates having LED as a light source, and glass plates of organic EL illuminants are used. By sticking the optical sheet with a pressure-sensitive adhesive layer of the invention directly on these light sources, the effect of efficiently outgoing light can be exhibited without sealing the lights from the light sources inside.

In general, when a light diffusing plate is provided on a backlight, since an optical sheet is merely put on the backlight, a thin air layer having a refractive index of 1.0 is present between the backlight and the optical sheet and loss of light occurs. However, by providing the optical sheet through a pressure-sensitive adhesive layer, the loss of light can be reduced and, further, by providing a pressure-sensitive adhesive layer having a refractive index higher than that of the surface of the backlight of adherend, loss of light hardly occurs, and light can outgo efficiently.

As the optical film having been subjected to embossing or roughening processing treatment so as to increase the surface area thereof, an optical film having been subjected to embossing or roughening processing treatment so as to increase the surface area thereof on the surface opposite to the side stuck with a pressure-sensitive adhesive layer is used. By performing embossing or roughening processing treatment to increase surface area like this, it is possible to outgo light efficiently to the air layer finally.

As the optical film having been subjected to embossing or roughening processing treatment so as to increase the surface area thereof, specifically, a microlens, and a light diffusing plate may be mentioned.

As the above-mentioned microlenses, those having been subjected to 1 to 100 $\mu$m uniform bullet-like, spherical, or pyramid-like processing treatment on the surface may be mentioned. Since such microlenses have a uniform structure, it is possible to uniform outgoing of light to an air layer.

Further, the microlens array which is used in the invention is not especially restricted. For example, those having an f number (focal distance of lens/effective aperture) of 0.5 to 4.0 are preferred. Further, those having the f number of 0.6 to 3.0 are more preferred. When the f number is within the above range, the light of backlight can be converged more effectively.

The manufacturing method of the microlens is not especially restricted, and a method of pressing a uniform sheet with a die to perform surface molding, and a method of molding by coating a liquid resin and curing by UV or heating can be used.

Further, a diffusing plate manufactured by coating a polymer solution having dispersed therein diffusing particles in a dry thickness smaller than the particle size of the particles to thereby form unevenness on the surface, and a diffusing plate manufactured by mixing fine particles in a melt of polymer and extruding to thereby give light diffusing function to the surface can also be used.

As the optical film according to the invention, an optical film including a lamination of a plurality of optical films which are different in materials in embossing or roughening processing treatment of a pressure-sensitive adhesive layer surface and an air layer surface can also be used. For example, it is possible to contrive to give the function of capable of maintaining strength to a pressure-sensitive adhesive layer surface and give the function of capable of easily processing to an air layer surface.

As the specific examples of the materials of the optical film, any material can be used so long as it is transparent. Specifically, acrylic resins, polyester resins, epoxy resins, polystyrene resins, polycarbonate resins, urethane resins, styrene-acrylonitrile copolymers, and styrene-methyl methacrylate copolymers may be mentioned.

Particularly, making the order of the refractive index of the surface of an adherend for outgoing light < the refractive index of a pressure-sensitive adhesive layer < the refractive index of an optical film is a preferred constitution to remove the loss of light between the layers. For example, a constitution including the refractive index of the surface of a light guiding plate of polymethyl methacrylate for outgoing light of 1.49, the refractive index of an acryl pressure-sensitive adhesive of 1.49 or more, or the refractive index of an optical film of 1.50 or more is preferably used.

The optical film can be a laminate of a plurality of optical films (optical film) 1. As the laminating method of laminated optical film 1, mere superposing can also be used, however, the use of the pressure-sensitive adhesive of the invention makes it possible to guide light more efficiently to a liquid crystal module.

As optical films (optical members), materials used in forming image displays such as liquid crystal displays are used. Further, the kinds thereof are not especially restricted. For example, as optical members, optical films such as polarizing plates may be mentioned. As polarizing plates, those having a transparent protective film on one side or both sides of polarizers are generally used.

Polarizers are not especially restricted and various kinds of polarizers can be used. As polarizers, for example, those obtained by the adsorption of dichroic materials such as iodine or dichroic dyes onto hydrophilic high molecular weight films such as polyvinyl alcohol films, partially formalated polyvinyl alcohol films, or ethylene-vinyl acetate copolymer partially saponified films and monoaxially stretching, and polyene oriented films such as dehydration treated products of polyvinyl alcohols and dehydrochlorination treated products of polyvinyl chloride may be mentioned. Of these polarizers, polarizers including polyvinyl alcohol films and dichroic materials such as iodine are preferably used. The thickness of these polarizers is not especially restricted but generally from 5 to 80 μm or so.

The polarizers which are obtained by dyeing polyvinyl alcohol films with iodine and monoaxially stretching can be manufactured by dyeing polyvinyl alcohol by immersing in an aqueous solution of iodine to stretch it three to seven times the original length. If necessary, immersion can be carried out in an aqueous solution of potassium iodide that may contain boric acid, zinc sulfate, or zinc chloride. Further, if necessary, polyvinyl alcohol series films may be soaked in water and washed before dyeing. By washing polyvinyl alcohol films with water, not only the stains on the surface of the polyvinyl alcohol series films and a blocking preventive can be washed but also the effect of prevention of lack of uniformity such as dyeing unevenness can be obtained by swelling the polyvinyl alcohol films. Stretching may be carried out after dyeing with iodine, may be performed while dyeing, or may be dyed after stretching. Stretching can also be performed in an aqueous solution of boric acid or potassium iodide, or in a water bath.

As the materials to form a transparent protective film provided one side or both sides of polarizers, materials excellent in transparency, mechanical strength, heat stability, a water shielding property and isotropy are preferred. For example, polyester polymers such as polyethylene terephthalate and polyethylene naphthalate; cellulose polymers such as diacetyl cellulose and triacetyl cellulose; acrylic polymers such as polymethyl methacrylate; styrene polymers such as polystyrene and acrylonitrile/styrene copolymers (AS resins); and polycarbonate polymers may be mentioned. In addition, polyolefin having a polyethylene, a polypropylene, cyclo-series or norbornene structure; polyolefin polymers such as ethylene-propylene copolymers; vinyl chloride polymers; amide polymers such as nylon and aromatic polyamide; imide polymers; sulfone polymers; polyether sulfone polymers; polyether ether ketone polymers; polyphenylene sulfide polymers; vinyl alcohol polymers; vinylidene chloride polymers; vinyl butyral polymers; allylade polymers; polyoxymethylene polymers; epoxy polymers; and blended products of these polymers may be mentioned as the examples of the polymers to form a transparent protective film. The transparent protective film can also be formed as a hardened layer of thermosetting or UV-curable resins. Examples of these resin includes acrylic resin, urethane resin, acrylurethane resin, epoxy resin and silicone resin.

Further, the polymer films disclosed in JP-A-2001-343529 (WO 01/37,007), e.g., resin compositions containing (A) a thermoplastic resin having a substituted and/or unsubstituted imide group on the side chain, and (B) a thermoplastic resin having substituted and/or unsubstituted phenyl and nitrile groups on the side chain may be mentioned. Specifically, films including resin compositions containing alternating copolymers including isobutylene and N-methylmaleimide and acrylonitrile/styrene copolymers may be mentioned. Films including mixed extrusion products of resin compositions can be used.

The thickness of the protective film can be arbitrarily determined. However, the thickness is generally 1 to 500 μm or so from the points of strength, workability such as handling properties, and thinness of the layer. The thickness of the protective film is preferably 1 to 300 μm, more preferably 5 to 200 μm.

It is preferred that protective films are free of coloring as far as possible. Accordingly, a film having a phase difference value in the thickness direction of the film represented by $Rth=(nx-nz).d$ (in which nx is the refractive index in the slow axis direction in the plane of the film, nz is the refractive index in the thickness direction of the film, and d is the thickness of the film) of -90 nm to +75 nm is preferably used. By using a film having a phase difference value (Rth) in the thickness direction of -90 nm to +75 nm, coloration (optical coloration) of a polarizing plate attributable to a protective film can be almost removed. A phase difference value (Rth) in the thickness direction is more preferably - 80 nm to +60 nm, especially preferably -70 nm to +45 nm.

As the protective films, from the points of polarizing properties and durability, cellulose polymers such as triacetyl cellulose and the like are preferred. A triacetyl cellulose film is especially preferred. When a protective film is stuck on both sides of a polarizer, protective films made of the same polymer materials may be used on both sides, or protective films made of different polymer materials may be used. The polarizer and protective films are generally adhered through an aqueous adhesive. As the aqueous adhesives, an isocyanate adhesive, a polyvinyl alcohol adhesive, a gelatin adhesive, vinyl latex, aqueous polyurethane, and aqueous polyester may be mentioned.

The side of the transparent protective film on which a polarizer is not adhered may be subjected to treatments such as hard coat layer treatment, treatments for antireflection, sticking prevention, diffusion, and antiglare.

The hard coat treatment is performed for the purpose of stretch resistance of the surface of a polarizing plate. A hard coat layer can be formed, for example, by a method of adding a curing film excellent in hardness and sliding property by a proper UV-curable resin such as acryl or silicone resins on the surface of the transparent protective film. The antireflection treatment is performed for the purpose of prevention of reflection of outer light on the surface of a polarizing plate, and this can be achieved according to formation of conventional antireflection films. The sticking prevention treatment is carried out for the purpose of the prevention of sticking with the contiguous layer.

Further, the antiglare treatment is performed for the purpose of prevention of the inhibition of visibility of the light transmitting through a polarizing plate by the reflection of outer light on the surface of the polarizing plate. This treatment can be done by appropriate methods such as a surface roughening method by, for example, sand blasting finish or embossing finish, and a blending method of transparent fine particles, to give a fine irregular structure to the surface of a transparent protective film. As the fine particles to be contained in the formation of the surface fine irregular structure, for example, transparent fine particles such as inorganic fine particles which are sometimes electrically conductive such as silica, alumina, titania, zirconia, tin oxide, indium oxide, cadmium oxide, or antimony oxide having an average particle of from 0.5 to 50 $\mu$m; and organic fine particles including crosslinked or not crosslinked polymers may be mentioned. When the surface fine irregular structure is formed, the use amount of the fine particles is generally 2 to 50 parts by weight or so based on 100 parts by weight of the transparent resin to be formed of surface fine irregular structure. Further, the use amount of the fine particles is preferably 5 to 25 parts by weight. The antiglare layer may be a layer also functioning as a diffusing layer to widen the visual angle (a visual angle-widening function) by diffusing the light transmitting the polarizing plate.

The antireflection layer, sticking preventing layer, diffusing layer, and antiglare layer can be provided on the transparent protective film per se, alternatively these layers can be provided separately as optical layers different from the transparent protective film.

As the optical films in the invention, e.g., optical layers that are sometimes used in forming liquid crystal displays such as a reflecting plate, a semi-transmission plate, a phase difference plate (including wavelength plates of 1/2 and 1/4, etc.), a visual angle compensatory film, and a luminance improving film may be mentioned. These films can be used singly as optical members in the invention and, in addition, one or two or more of these films can be used in the polarizing plate by lamination in practical use.

In particular, a reflection type polarizing plate or a semi-transmission type polarizing plate including a polarizing plate further laminated with a reflecting plate or a semi-transmission plate; an elliptic polarizing plate or a circular polarizing plate including a polarizing plate further laminated with a phase difference plate; a wide visual angle polarizing plate including a polarizing plate further laminated with a visual angle compensatory film; and a polarizing plate including a polarizing plate further laminated with a luminance improving film are preferred.

The reflection type polarizing plate includes a polarizing plate which is provided with a reflecting layer. This polarizing plate is to form a liquid crystal display for displaying by reflecting the incident light from visual side (display side). This type of polarizing plate has an advantage such that built-in light source such as backlight can be omitted and thinning of liquid crystal display can be easily contrived. The reflection type polarizing plate can be arbitrarily formed by s method of providing a reflecting layer comprising metals on one side of the polarizing plate, if necessary, through a transparent protective layer.

As the specific example of the reflection type polarizing plate, a polarizing plate having a reflecting layer formed by providing a foil of a reflective metal such as aluminum or a deposited film on one side of a transparent protective film having been subjected to matting treatment according to necessity may be mentioned. Further, a polarizing plate formed by subjecting the transparent protective film to the treatment of surface fine irregular structure by using fine particles and providing a reflecting layer having a fine irregular structure thereon can also be mentioned. The reflecting layer having a fine irregular structure has advantages of capable of preventing directionality and appearance such as glare by diffusing incident light by irregular reflection, and controlling unevenness in light and shade. The transparent protective film containing fine particles also has an advantage such that unevenness in light and shade can be further controlled as incident light and the reflected light thereof are diffused when they are transmitting the transparent protective film. The reflecting layer having a fine irregular structure which is reflected the surface fine irregular structure of the transparent protective film can be formed by directly applying a metal on the surface of the transparent protective layer according to an arbitrary method, such as a deposition method, e.g., a vacuum deposition method, an ion-plating method, or a sputtering method, or a galvanizing method.

In place of the method of directly providing the reflecting plate on the transparent protective film of the polarizing plate, the reflecting plate can also be used as a reflecting sheet including an arbitrary film provided with a reflecting layer in accordance with the transparent film. Since a reflecting layer generally includes a metal, the use form in a state of the reflection surface being covered with a transparent protective film or a polarizing plate is preferred in the points of prevention of reduction of reflectance due to oxidation, continuance of initial reflectance for a long term, and avoidance of separate construction of a protective layer.

A semi-transmitting type polarizing plate can be obtained by a semi-transmitting type reflecting layer such as a half mirror and the like reflecting light by the reflecting layer in the above and transmitting. A semi-transmitting type polarizing plate is generally provided on the rear side of a liquid crystal cell. When a liquid crystal display is used in a relatively bright atmosphere, a liquid crystal display of the type displaying an image by reflecting incident light from the viewing side (displaying side) can be formed. On the other hand, when a liquid crystal display is used in a relatively dark atmosphere, a liquid crystal display of displaying an image by using built-in light source such as backlight that is built in on the backside of a semi-transmitting type polarizing plate can be formed. Namely, a semi-transmitting type polarizing plate is useful in forming a liquid crystal display of the type capable of saving the energy of using a light source such as backlight in a bright atmosphere, and also capable of using with a built-in light source in a relatively dark atmosphere.

The elliptic polarizing plate or a circular polarizing plate including a polarizing plate further laminated with a phase difference plate will be described. When linearly polarized light is changed to elliptically polarized light or circularly polarized light, or elliptically polarized light or circularly polarized light is changed to linearly polarized light, or polarizing direction of linearly polarized light is changed, phase difference plates are used. In particular, as phase difference plates for changing linearly polarized light to circularly polarized light, or changing circularly polarized light to linearly polarized light, what is called a 1/4 wavelength plate (also referred to as a $\lambda/4$ plate) is used. A 1/2 wavelength plate (also referred to as a $\lambda/2$ plate) is generally used to change polarizing direction of linearly polarized light.

An elliptic polarizing plate is effectively used in a case where coloration (blue or yellow) generated by double refraction of a liquid crystal layer of a super twist nematic (STN) type liquid crystal display is compensated for (prevented to) display white and black free from the coloration. Further, after three-dimensional refractive index has been controlled, coloration occurring when image plane of the liquid crystal display is diagonally viewed can also be compensated for (prevented) and preferred. A circular polarizing plate is effectively used in a case of adjusting the tone of the image of a reflection type liquid crystal display of color image display, which has also a function of reflection prevention.

As phase difference plates, double refractive films obtained by uniaxial or biaxial stretching of high molecular weight materials, oriented films of liquid crystal polymers, and oriented layers of liquid crystal polymers supported with films may be mentioned. The thickness of phase difference plates is also not especially restricted, however, phase difference plates having the thickness of 20 to 150 $\mu$m is ordinarily used.

The examples of the high molecular weight materials include, e.g., polyvinyl alcohol, polyvinyl butyral, polymethyl vinyl ether, polyhydroxyethyl acrylate, hydroxyethyl cellulose, hydroxypropyl cellulose, methyl cellulose, polycarbonate, polyallylate, polysulfone, polyethylene terephthalate, polyethylene naphthalate, polyether sulfone, polyphenylene sulfide, polyphenylene oxide, polyallyl sulfone, polyvinyl alcohol, polyamide, polyimide, polyolefin, polyvinyl chloride, cellulose polymers, norbornene resins, and various binary system and ternary system copolymers, graft copolymers, and blended products of these materials. These high molecular weight materials become oriented products by stretching (stretched films).

As the liquid crystal polymers, for example, various kinds of main chain type and side chain type polymers to the main chain and the side chain of which is introduced a conjugating linear atomic group (mesogen) to impart liquid crystal orientation property may be mentioned. The specific examples of the main chain type liquid crystal polymers include nematic orientating polyester liquid crystal polymers, discotic polymers and cholesteric polymers having a structure bonding to a mesogen group at the spacer part to impart a bending property. The specific examples of the side chain type liquid crystal polymers include polymers having a mesogen part containing a nematic orientating property-imparting para-position substituted cyclic compound unit through a spacer part including conjugating atomic group as the side chain, with polysiloxane, polyacrylate, polymethacrylate or polymalonate as the main chain skeleton. These liquid crystal polymers are subjected to treatment by developing a liquid crystal polymer solution on the orientation treated surface of the rubbing treated surface of a thin film of polyimide or polyvinyl alcohol formed on a glass plate, or rhombic deposition of silicon oxide, and heat treating.

Phase difference plates may have arbitrary phase difference according to use purpose, for example, compensation of coloration and visual angle due to various wavelength plates and double refraction of the liquid crystal layer. Further, two or more kinds of phase difference plates may be laminated to control optical characteristics such as phase difference.

Further, the above-mentioned elliptic polarizing plate and the reflection type elliptic polarizing plate are arbitrary laminates of a polarizing plate or a reflection type polarizing plate and a phase difference plate in arbitrary combination. Such an elliptic polarizing plate can also be formed by successively and separately laminating plates so as to become the combination of a (reflection type) polarizing plate and a phase difference plate in the manufacturing process of a liquid crystal display. However, those as optical members such as an elliptic polarizing plate and the like in advance as above are excellent in the stability of quality and workability of lamination and can improve manufacturing efficiency of a liquid crystal display and the like.

A visual angle compensatory film is a film to widen a visual angle so that the image is seen relatively clearly even when the image plane of a liquid crystal display is viewed from a little oblique direction not vertical to the image plane. As such a phase difference plate for visual angle compensation, for example, a phase difference plate, an orientation film of a liquid crystal polymer, and the one including a transparent substrate having thereon an orientation layer of a liquid crystal polymer may be mentioned. As ordinary phase difference plates, polymer films uniaxially stretched in the plane direction and having double refraction are used. To the contrary, as the phase difference plates used as a visual angle compensatory film, polymer films biaxially stretched in the plane direction and having double refraction; polymers uniaxially stretched in the plane direction, stretched also in the thickness direction, and having double refraction controlled in the refractive index in the thickness direction; and two directionally stretched films such as tilt orientation films may be used. As the tilt orientation films, the ones obtained by adhering a heat shrinking film to a polymer film and heating to subject the polymer film to stretching treatment or/and contraction treatment under the action of the shrinkage force; and liquid crystal polymers subjected to tilt orientation may be mentioned. As the material polymers of the phase difference plate, the same polymers described above in the phase difference plates may be used, and arbitrary materials can be used for the purposes of prevention of coloration due to the change of visible angle based on the phase difference by a liquid crystal cell, and widening of visual angle of excellent visibility.

Further, from the point of achieving a wide visual angle of excellent visibility, an optically compensatory phase difference plate including a triacetyl cellulose film support having thereon an optically anisotropic layer including an orientation layer of a liquid crystal polymer, in particular, a tilt orientation layer of a discotic liquid crystal polymer can be preferably used.

A polarizing plate obtained by sticking a polarizing plate and a luminance improving film is generally provided on the rear side of a liquid crystal cell. When the backlight of a liquid crystal display and natural light by the reflection from the rear side are subjected to incidence, the luminance improving film reflects linearly polarized light of a prescribed polarizing axis or circularly polarized light in a prescribed direction, and other lights show a property of transmission. Accordingly, a polarizing plate including a laminate of a luminance improving film and a polarizing plate makes the light from the light source such as backlight incident to obtain transmitted light in a prescribed polarized state, and lights other than the prescribed polarized state are reflected without transmitting. The light reflected on the surface of the luminance improving film is inverted via a reflecting layer provided on further backside thereof and subjected to incidence again to the luminance improving film, and all or a part of the light is transmitted as the light in the prescribed polarized state to contrive increase in the quantity of the light transmitting through the luminance improving film, at the same time, luminance can be improved by supplying polarized light which is difficult to be absorbed by a polarizer to increase the quantity of light that can be utilized by image display of a liquid crystal display. Namely, when light is subjected to incidence by the backlight from the rear side of the liquid crystal cell through the polarizer without using a luminance improving film, the lights having the direction of polarization that does not coincide with the polarization axis of the polarizer are almost absorbed by the polarizer and do not transmit the polarizer. Accordingly, although it differs according to the characteristics of the used polarizer, about 50% of light is absorbed by the polarizer, and the quantity of light that can be used in the liquid crystal image display decreases by the absorbed quantity and images are darkened. The luminance improving film does not make the light having the direction of polarization to be absorbed by a polarizer to incidence to the polarizer and once reflects the light by the luminance improving film and inverts the light via the reflecting layer provided on further backside to make the light incidence to the luminance improving film again. This pattern is repeated and only the polarized light whose direction of polarization of light, which is reflected and inverted between the luminance improving film and the reflecting layer, becomes direction of polarization passing through the polarizer is transmitted by the luminance improving film and supplied to the polarizer, so that the light such as backlight can be effectively used in image display of the liquid crystal display, and the image plane can be brightened.

A diffusing plate (a light diffusing sheet) can also be provided between the luminance improving film and the reflecting layer and the like. The light in a polarized state reflected by the luminance improving film goes toward the reflecting layer and the like, and the provided diffusing plate uniformly diffuses the passing light and, at the same time, dissolves the polarized state to be a non-polarized state. Namely, the diffusing plate returns the polarized light to the state of original natural light. This non-polarized state, that is, the light in the state of natural light goes toward the reflecting layer and the like, reflects via the reflecting layer and the like, passes through the diffusing plate again and subjected to incident to the luminance improving film, and this pattern is repeated. By providing the diffusing plate that returns the polarized light to the state of original natural light between the luminance improving film and the reflecting layer, unevenness in brightness of displaying image plane can be reduced and uniform and bright image plane can be provided while maintaining the brightness of displaying image plane. By providing such a diffusing plate, it is thought that initial incident light increases in the number of times of repetition of reflection properly conjointly with diffusing function of the diffusing plate and uniform and bright displaying image plane can be provided.

As the above-mentioned luminance improving film, for example, films having properties that transmit linearly polarized light of a prescribed polarizing axis and reflect other lights, such as multilayer thin film of dielectric substance and multilayer laminate of thin films different in refractive index anisotropy, and films having properties that reflect either one of counterclockwise or clockwise circularly polarized light and transmit other lights, such as orientation film of a cholesteric liquid crystal polymer and a film supporting orientation liquid crystal layer on a substrate can be properly used.

Accordingly, the luminance improving film of the type that transmits linearly polarized light of a prescribed polarizing axis can efficiently transmit the light while controlling absorption loss by the polarizing plate by subjecting the transmitting lights incident to the polarizing plate as they are by making the polarizing axes even. On the other hand, a luminance improving film that transmits circularly polarized light such as a cholesteric liquid crystal layer can make lights incident to a polarizer as it is. However, it is preferred to make linearly polarized light of circularly polarized light via a phase difference plate and make incident to a polarizer from the point of controlling absorption loss. Incidentally, by using 1/4 wavelength plate as the phase difference plate, circularly polarized light can be converted to linearly polarized light.

A phase difference plate which functions as a 1/4 wavelength plate in a wide wavelength range such as a visible light region can be obtained, for example, by a method of superimposing a phase difference layer which functions as a 1/4 wavelength plate to hypochromic light of wavelength of 550 nm upon a phase difference layer showing other phase difference properties, for example, a phase difference layer which functions as a 1/2 wavelength plate. Accordingly, a phase difference plate to be arranged between a polarizing plate and a luminance improving film may include one layer or two or more layers of phase difference layers.

Incidentally, also in connection with cholesteric liquid crystal layer, by taking the arrangement structure of the superposition of combination of two layers or three or more layers different in reflection wavelength, a layer which reflects circularly polarized light in a wide wavelength range such as a visible light region can be obtained, so that transmitting circularly polarized light in a wide wavelength range can be obtained on the basis of the above fact.

As the above polarization separating type polarizing plate, a polarizing plate may be a laminate of a polarizing plate and two or three or more optical layers. Accordingly, a polarizing plate may be a reflection type elliptic polarizing plate and a semi-transmission type elliptic polarizing plate which are combining the reflection type polarizing plate or semi-transmission type polarizing plate with a phase difference plate.

An optical film including the optical layer which is laminated on a polarizing plate can also be formed by a method of lamination successively and separately in the manufacturing process of a liquid crystal display. However, those prepared as optical members in advance are excellent in the stability of quality and assembly operation, and manufacturing process of a liquid crystal display and the like can be improved. Appropriate adhering means such as pressure-sensitive adhesive layers can be used in lamination. In adhering the polarizing plate and other optical layers, the optical axes thereof can be arbitrary configuration angles in accordance with the objective phase difference properties.

Each layer of the optical film and pressure-sensitive adhesive layer of the optical film with a pressure-sensitive adhesive in the invention may have ultraviolet absorbing performance according to a method of treating with salicylate ester compounds, benzophenol compounds, benzotriazole compounds, cyano acrylate compounds, or nickel complex salt compounds.

The optical film (the optical film with a pressure-sensitive adhesive) of the invention can be preferably used in forming various image displays such as a liquid crystal display. A liquid crystal display can be formed in conventional methods. Namely, a liquid crystal display is generally formed by arbitrarily assembling liquid crystal module 50 such as liquid crystal cell and optical members with a pressure-sensitive adhesive and, if necessary, component parts such as an illuminating system, and building in driving circuit. In the invention, there are no particular restrictions except for using the optical film according to the invention and conventional methods can be used. With respect to liquid crystal cells, an optional type, e.g., TN type, STN type, and $\pi$ type can be used.

Appropriate liquid crystal displays such as a liquid crystal display arranging an optical film with a pressure-sensitive adhesive on one side or both sides of a liquid crystal cell, and those using backlight or reflecting plates in an illuminating system can be formed. In this case, the optical member according to the invention can be installed on one side of a liquid crystal cell. Further, in forming a liquid crystal display, one or two or more layers of appropriate components, for example, a diffusing plate, an antiglare layer, an antireflection film, a protective plate, a prism array, a lens array sheet, a light diffusing plate, and backlight can be arranged.

When these optical films are stuck on a pressure-sensitive adhesive layer, for improving anchoring force of these optical films, the surface of the optical films may be subjected to easy adhesion treatment such as corona treatment and plasma treatment, or undercoating treatment.

The image display and illuminating system in the invention are liquid crystal displays and the like using the above-mentioned backlight system, which techniques are capable of efficiently outgoing light and contributing to energy saving and long term of life.

On the other hand, backlight system 6 in the invention has a feature that, as shown in Figs. 1 to 5, an adherend for outgoing light (e.g., 30) is joined with an optical film having been subjected to embossing or roughening processing treatment so as to increase the surface area (e.g., 10 and 12) through pressure-sensitive adhesive layer 20. Pressure-sensitive adhesive layer 20 may be a single layer or two or more layers may be laminated.

As the hydroxyl group-containing monomers, specifically 2-hydroxyethyl (meth)acrylate, 3-hydroxypropyl (meth)-acrylate, 4-hydroxybutyl (meth)acrylate, and 6-hydroxyhexyl (meth)acrylate, may be mentioned. Of these, pressure-sensitive adhesive compositions (and pressure-sensitive adhesive layers) including, as base polymers, (meth)acrylic polymers which include hydroxyl group-containing monomers having 4 or more carbon atoms in the side chain are prefered in view of heat resistance.

Hydroxyl group-containing monomers are used, wherein 0.1 to 10 wt% thereof, preferably 0.3 to 7 wt% thereof, is copolymerized. When the content of the hydroxyl group-containing monomer is excessively small, long-term durability is liable to lower, while when the content is in excess, there are cases where the resulting pressure-sensitive adhesive is excessively hard and unfavorableness occurs in durability.

As the acrylic pressure-sensitive adhesives, acrylic monomers having alkyl groups to be copolymerized are used, and for example, ethyl (meth)acrylate, propyl (meth)acrylate, n-butyl (meth)acrylate, isobutyl (meth)acrylate, pentyl (meth)acrylate, isoamyl (meth)-acrylate, hexyl (meth)acrylate, heptyl (meth)acrylate, 2-ethylhexyl (meth)acrylate, isooctyl (meth)acrylate, isononyl (meth)acrylate, and isomyristyl (meth)acrylate may be mentioned. These monomers may be used alone or in combination of thereof as mixture. In view of the compatibility with the tackifier which is added to base polymers, n-butyl (meth)acrylate is preferably used, and the content thereof is preferably 50 to 99 wt%, more preferably 65 to 99 wt% in the acrylic copolymer.

Further, these (meth)acrylic polymers may be arbitrarily copolymerized with other copolymerizable monomers (monomer components). As the copolymerizable monomers, methyl (meth)acrylate, vinyl acetate, acrylamide, dimethylamino- methylacrylamide, acryloylmorpholine, glycidyl acrylate, styrene derivatives such as styrene, and $\alpha$-methylstyrene, high refractive index monomers such as derivatives of vinyl toluene and $\alpha$-vinyltoluene, benzyl (meth)acrylate, naphthyl (meth)acrylate, phenoxyethyl (meth)acrylate, and phenoxybutyl (meth)acrylate may be mentioned.

In particular, for improving an adhesive property, increasing cohesion, and heightening heat resistance by efficient crosslinking, monomer components having a carboxyl group (carboxyl group-containing monomers) are used.

As the carboxyl group-containing monomers, for example, acrylic acid, methacrylic acid, itaconic acid, and maleic acid may be mentioned. Of these, acrylic acid and methacrylic acid are especially preferably used. These monomers may be used alone or in combination thereof as mixture.

The carboxyl group-containing monomers are used copolymerized in a proportion of 0.1 to 5 wt%, preferably 0.2 to 3 wt%. When the amount of the carboxyl group-containing monomers is excessively small, the resulting products are inferior in an adhering property, while when the amount is in excess, the compatibility with the tackifier largely deteriorates and the pressure-sensitive adhesive unfavorably becomes clouded.

The (meth)acrylic polymer is a (meth)acrylic polymer copolymerized with 0.1 to 20 wt% of a nitrogen-containing monomer, 0.1 to 5 wt% of a carboxyl group-containing monomer, and 0.1 to 10 wt% of a hydroxyl group-containing monomer, and the gel fraction of the(meth)acrylic polymer is adjusted to 35 to 85 wt%. When the functional group containing nitrogen atoms and the carboxyl group coexist in the pressure-sensitive adhesive polymer ((meth)acrylic polymer) like this, internal cohesion is further improved by the interaction, and when used as the resin which is usually used as a light guiding plate such as polymethyl methacrylate resin and polycarbonate resin, a foaming phenomenon at the interface conspicuously decreases.

As the nitrogen-containing monomers, monomers having an amino group, or an imido group, or an amido group may be mentioned. For example, (meth)acrylamide, N,N-dimethyl-(meth)acrylamide, N,N-diethylacrylamide, N-methylol-(meth)acrylamide, N-methoxymethyl(meth)acrylamide, N-butoxymethyl(meth)acrylamide, dimethylaminoethyl (meth)acrylate, t-butylaminoethyl (meth)acrylate, (meth)acrylonitrile, N-(meth)acryloyl morpholine, N-vinyl-2-pyrrolidone, N-cyclohexylmaleimide, N-phenyl- maleimide, N-methylmaleimide, N-ethylmaleimide, N-propyl- maleimide, N-butylmaleimide and N-hexylmaleimide may be mentioned. These monomers may be used alone or incombination thereof as mixture.

The amount of nitrogen-containing monomers for use in copolymerization is 0.1 to 20 wt%, more preferably 0.1 to 10 wt%. When the content of the nitrogen-containing monomers is excessively small, internal cohesion cannot be sufficiently improved, and when excess amount of the monomer is used, adhesiveness sometimes lowers, and so not preferred.

The weight average molecular weight of the (meth)acrylic polymers is generally 600,000 or more, preferably 700,000 to 3,000,000. When the weight average molecular weight is excessively small, durability lowers, while when it is excessively large, workability worsens, and so not preferred.

The (meth)acrylic polymers can be manufactured according to conventional arbitrary methods, such as solution polymerization, bulk polymerization, and emulsion polymerization.

In solution polymerization, it is preferred to use a polymerization initiator such as azobisisobutyronitrile (AIBN) in an amount of 0.01 to 0.2 parts by weight based on 100 parts by weight of the (meth)acrylic polymer, more preferably 0.05 to 0.15 parts by weight. The (meth)acrylic polymers can be obtained by reaction using a polymerization solvent such as ethyl acetate, under nitrogen current at 50 to 70°C for 8 to 30 hours.

The thus-obtained acrylic copolymers can be subjected to modification treatments for adjusting the refractive index of the acrylic copolymers, for increasing internal cohesion, or for increasing heat resistance.

For example, as the modification treatment, graft polymerization reaction is carried out in the presence of 100 parts by weight of the obtained (meth)acrylic polymer, by adding 10 to 200 parts by weight, preferably 10 to 100 parts by weight, of a monomer (a monomer component) which is different from the above-mentioned (meth)acrylic polymer in composition, and if necessary, also adjusting the medium, and using 0.02 to 5 parts by weight, preferably 0.04 to 2 parts by weight, of peroxide.

The monomer which is different in composition is not especially restricted, and (meth)acrylic monomers such as benzyl (meth)acrylate, phenoxy (meth)acrylate, naphthyl (meth)- acrylate, and isobormyl (meth)acrylate, and high refractive index monomers such as styrene derivatives, e.g., styrene and $\alpha$-methylstyrene, and derivatives, e.g., vinyl-toluene and $\alpha$-vinyltoluene may be mentioned. By using the high refractive index monomers, the refractive index of the acrylic pressure-sensitive adhesives can be heightened.

As the polymerization method, in the case of solution polymerization, graft polymerization reaction is carried out by adding a necessary monomer and a solvent for viscosity adjustment to the solution of the (meth)acrylic polymer, subjecting to nitrogen substitution, and adding 0.02 to 5 parts by weight, preferably 0.04 to 2 parts by weight of peroxide, followed by heating at 50 to 80°C for 4 to 15 hours.

In the case of emulsion polymerization, water is added to the aqueous dispersion of the (meth)acrylic polymer for adjusting solids content, necessary monomer is further added and, after nitrogen substitution while stirring to make the (meth)acrylic polymer particles absorb the monomer, an aqueous solution of water-soluble peroxide is added, and heating is carried out at 50 to 80°C for 4 to 15 hours to terminate the reaction.

By performing polymerization of a monomer in the presence of the (meth)acrylic polymer, the homopolymer of the monomer is also formed. However, since graft polymerization to the (meth)acrylic polymer also occurs, a polymer including other homopolymer is present in the acrylic copolymer homogeneously. When the amount of the peroxide which is used as the initiator at this time is small, the graft polymerization reaction takes a lot of time, while when it is excessively great, a homopolymer of the monomer is formed in a large amount, and so not preferred.

In the above-mentioned pressure-sensitive adhesive composition (the pressure-sensitive adhesive layer), an adhesion-imparting agent such as a tackifier can be arbitrarily used.

As the tackifiers, there is no particular limitation but non-colored and transparent tackifiers are preferred. As the tackifiers, for example, tackifiers having an aromatic ring and a refractive index of 1.51 to 1.75 are preferably used. The weight average molecular weight of tackifiers is preferably 1,000 to 3,000, and the softening point is preferably 90°C or lower. When the weight average molecular weight exceeds 3,000 or the softening point exceeds 90°C, there are cases where the compatibility with acrylic polymers lowers, and when the weight average molecular weight is less than 1,000, there are cases where the cohesion of the pressure-sensitive adhesive lowers.

As the standard of transparency, 1 or less of Gardner color scale in a 50 wt% toluene solution is used. Specifically, styrene oligomer, phenoxyethyl acrylate oligomer, a copolymer of styrene and $\alpha$-methylstyrene, a copolymer of vinyl-toluene and $\alpha$-methylstyrene, a hydrogenated product of C9 petroleum resin, a hydrogenated product of terpene phenol, rosin, and the hydrogenated products of the rosin derivatives may be mentioned. At this time, it is preferred in view of the heat resistance to use a tackifier having a softening point of 40°C or less in an amount of less than 30 parts by weight in combination with a tackifier having a softening point of 50°C or more in an amount of 20 parts by weight or more (50 parts by weight in total).

The blending amount of these tackifiers is 10 to 150 parts by weight, preferably 20 to 100 parts by weight, based on solids content of 100 parts weight of the (meth)acrylic polymer, and adjusted to a prescribed refractive index. When the amount is excessively small, the refractive index does not sufficiently increase, and when the amount is excessively high, the pressure-sensitive adhesive becomes hard and adhesiveness lowers, so that not preferred.

A crosslinking agent can be arbitrarily used in the pressure-sensitive adhesive composition (the pressure-sensitive adhesive layer). In particular, when the (meth)acrylic polymer is used as the base polymer, cohesion and durability are improved by crosslinking and preferred.

As the crosslinking agents, isocyanate crosslinking agents, epoxy crosslinking agents, and oxazoline crosslinking agents may be mentioned.

As the isocyanate crosslinking agents, diisocyanates such as tolylene diisocyanate, diphenylmethane diisocyanate, xylylene diisocyanate, isophorone diisocyanate, and hexamethylene diisocyanate, diisocyanate adducts which is modified with various kinds of polyols, and polyisocyanate compounds forming an isocyanurate ring, a biuret body, and an allophanate body may be mentioned. Aliphatic and alicyclic isocyanates are especially preferably used, since crosslinked products become transparent.

Although the blending amount of the crosslinking agent differs according to the materials to be used, it is used in the range of generally 0.03 to 2 parts by weight, preferably 0.05 to 1 parts by weight, based on 100 parts by weight of the (meth)acrylic polymer. When the blending amount of the crosslinking agent is excessively small, cohesion is insufficient, and when the amount is excessively great, adhesiveness lowers and not preferred.

Further, in the aqueous dispersion of the modified (meth)acrylic polymer manufactured by emulsion polymerization, isocyanate crosslinking agents are not used in many cases. When isocyanate crosslinking agents are used, an isocyanate group easily reacts with water, so that blocked isocyanate crosslinking agents may be used.

As peroxides, those capable of generating radicals by heating to accelerate crosslinking of the base polymer of the pressure-sensitive adhesive composition can be used. However, considering workability and stability, peroxides of one minute half life temperature of 80 to 160°C, preferably 90 to 140°C are used. When one minute half life temperature is excessively low, there are cases where reaction occurs during preservation before coating and drying, and viscosity increases, as a result coating becomes impossible, while when it is excessively high, there are cases where the temperature in crosslinking reaction becomes high and side reaction occurs, the peroxide is left, and crosslinking progresses with the lapse of time, so that not preferred.

As peroxides for use in the invention, for example, di(2-ethylhexyl) peroxydicarbonate (one minute half life temperature: 90.6°C), di(4-t-butylcyclohexyl) peroxydicarbonate (one minute half life temperature: 92.1°C), di-sec-butylperoxydicarbonate (one minute half life temperature: 92.4°C), t-butylperoxy neodecanoate (one minute half life temperature: 103.5°C), t-hexylperoxy pivalate (one minute half life temperature: 109.1°C), t-butylperoxy pivalate (one minute half life temperature: 110.3°C), dilauroyl peroxide (one minute half life temperature: 116.4°C), di-n-octanoyl peroxide (one minute half life temperature: 117.4°C), 1,1,3,3-tetramethylbutylperoxy-2-ethyl hexanoate (one minute half life temperature: 124.3°C), di(4-methyl- benzoyl) peroxide (one minute half life temperature: 128.2°C), dibenzoyl peroxide (one minute half life temperature: 130.0°C), t-butylperoxy isobutyrate (one minute half life temperature: 136.1°C), and 1,1-di(t-hexylperoxy)cyclohexane (one minute half life temperature: 149.2°C) may be mentioned. Of these peroxides, di(4-t-butylcyclohexyl) peroxydicarbonate (one minute half life temperature: 92.1°C), dilauroyl peroxide (one minute half life temperature: 116.4°C), and dibenzoyl peroxide (one minute half life temperature: 130.0°C) are especially preferably used for their excellent crosslinking reaction efficiency.

The half life of peroxide is the index showing the decomposition rate of the peroxide, which means the time until the residual content of the peroxide is reduced to half. The decomposition temperature to obtain half life in arbitrary time and half life time at arbitrary temperature are described in catalogs of manufacturers, for example, in Yuki Kasankabutsu Catalog, Dai 9 Han (Catalog of Organic Peroxides, 9th Edition) (May, 2003), Nippon Oils and Fats, Co., Ltd.

The peroxides may be used alone or in combination thereof as mixture. Howevere, the content as a whole is preferably 0.03 to 2 parts by weight of the peroxide based on 100 parts by weight of the base polymer, more preferably 0.04 to 1.5 parts by weight, and still more preferably 0.05 to 1 parts by weight. When the content is less than 0.03 parts by weight, there are cases where cohesion is insufficient, while when the content exceeds 2 parts by weight, crosslinking formation is excessive, and adhesiveness sometimes decreases.

When aromatic isocyanate compounds are used for using the peroxide, there are cases where the pressure-sensitive adhesive after hardening is colored, so that aliphatic and alicyclic isocyanates are preferably used in the case where transparency is required.

Although the blending amount of the crosslinking agent differs according to the materials to be used, it is used in the range of generally 0.03 to 2 parts by weight, preferably 0.05 to 1 parts by weight, based on 100 parts by weight of the (meth)acrylic polymer. When the blending amount of the crosslinking agent is excessively small, cohesion is insufficient, and when the amount is excessively great, adhesiveness lowers and not preferred.

The pressure-sensitive adhesive composition including the (meth)acrylic polymer blended with the crosslinking agent is coated on a support and dried, and the pressure-sensitive adhesive composition is subjected to crosslinking treatment so that the gel fraction of the pressure-sensitive adhesive after crosslinking is 35 to 85 wt%, preferably 40 to 80 wt%, more preferably 45 to 70 wt%. When the gel fraction is excessively small, cohesion is insufficient, and when it is excessively great, adhesiveness lowers and not preferred. In the above range of the gel fraction, when the pressure-sensitive adhesive is stuck on an acryl plate or the like, a foaming phenomenon at the interface of adhesion of the acryl plate and the pressure-sensitive adhesive can be prevented even if there is a moisture content from the acryl plate or generation of the residual monomer occurs. When a tackifier that is not taken in the crosslinking structure is used, the tackifier is dissolved in the solvent together with the uncrosslinked polymer, the gel fraction of the pressure-sensitive adhesive polymer ((meth)acrylic polymer) here shows the amount of the crosslinked polymer to the initial amount of the pressure-sensitive adhesive polymer after amending the amount of the tackifier. Further, there are cases where the gel fraction increases by heating preservation and the like. However, the increase in the gel fraction is set at 10 wt% as a standard and 95 wt% at the maximum.

To reach the above gel fraction, it is important to adjust the amount of the crosslinking agent, as well as adjusting the temperature and the time of crosslinking treatment when peroxide is used. The standard of the temperature and the time of crosslinking treatment is to make the amount of decomposition of the peroxide 50 wt% or more, preferably 70 wt% or more. When the amount of decomposition of the peroxide is excessively small, the residual peroxide abounds and crosslinking reaction occurs with the lapse of time, so that not preferred.

Specifically, for example, when the temperature of crosslinking treatment is one minute half life temperature, the amount of decomposition is 50 wt% by 1 minute and 75 wt% by 2 minutes, so that it is necessary to perform heating treatment for 1 minute or more. When the half life time of the peroxide at the temperature of crosslinking treatment is 30 seconds, crosslinking treatment of 30 seconds or more is necessary, and when the half life time of the peroxide at the temperature of crosslinking treatment is 5 minutes, crosslinking treatment of 5 minutes or more is necessary.

According to the peroxide to be used, the temperature and the time of crosslinking treatment are proportionally computed and adjusted from the half life time like this, assuming that the peroxide is primarily proportional, but from the possibility of the occurrence of side reaction, it is necessary to perform heating treatment to 170°C. The drying temperature may be used continuously as heating temperature, or may be treated after drying.

The time of crosslinking treatment is determined considering productivity and workability. The time of crosslinking treatment is 0.2 to 20 minutes, preferably 0.5 to 10 minutes.

In using peroxides, when aromatic isocyanate compounds are used, there are cases where the pressure-sensitive adhesive is colored after hardening, so that aliphatic and alicyclic isocyanates are preferably used in the case where transparency is required.

Further, the pressure-sensitive adhesive layer for use in the invention has a storage elastic modulus at 23°C of preferably 10,000 to 1,000,000 Pa, more preferably 30,000 to 500,000 Pa, and still more preferably 40,000 to 400,000 Pa. When the storage elastic modulus is excessively small, peeling off after sticking is liable to occur, while when it is excessively large, adhesiveness becomes poor, so that not preferred.

As the pressure-sensitive adhesive composition (the pressure-sensitive adhesive layer), it is preferred to use a light transmitting pressure-sensitive adhesive composition (a pressure-sensitive adhesive layer) containing light transmitting non-colored particles as dispersion.

As the light transmitting non-colored particles contained in the diffusing pressure-sensitive adhesive composition (the diffusing pressure-sensitive adhesive layer) as dispersion, appropriate colorless transparent particles can be used. As the light transmitting non-colored particles, for example, sometimes electrically conductive inorganic particles such as silica, alumina, titania, zirconia, tin oxide, indium oxide, cadmium oxide, and antimony oxide, and organic particles of crosslinked or not crosslinked polymers may be mentioned.

In the above, it is preferred to form the diffusing pressure-sensitive adhesive layer as a diffusing pressure-sensitive adhesive layer showing a light diffusing property of light diffusivity of 10% or less by containing non-colored particles. When the light diffusivity exceeds 10%, the degree of diffusion of light becomes excessive and brightness in the front (vertical) direction becomes insufficient when a reflection type liquid crystal display is viewed under illumination. From the point of balance of widening of a visual angle of good visibility and the brightness in the front direction by a light diffusing property, the light diffusivity is preferably 1 to 9%, 1.5 to 8%, and especially preferably 2 to 7%.

As shown in Fig. 1 in JP-A-2000-347006, the light diffusivity is defined as $100 \times I30/I10$ (%), when vertical light H is made incident to diffusing pressure-sensitive adhesive layer 1, with the strength of the transmitting light in the direction inclined by 10° to vertical transmitting direction 10 of vertical incident light H being I10, and the strength of the transmitting light in the direction inclined by 30° to the above 10 being I30.

Non-colored particles which can be preferably used from the points of achieving the property of the light diffusivity and the controlling property of adhesive strength have an average particle size of 1 to 10 $\mu$m, preferably 9 $\mu$m or less, and especially preferably 2 to 8 $\mu$m. From the point of controlling back scattering and giving an excellent diffusing property in the transmitting direction, taking the refractive index of non-colored particles as n1 and the refractive index of a pressure-sensitive adhesive layer as n2, the combination satisfies the equation $0.01 < |n1-n2| < 0.1$, preferably $|n1-n2| < 0.09$, and especially preferably $-0.08 < n1-n2 < -0.01$.

The amount of the light transmitting non-colored particles contained in the diffusing pressure-sensitive adhesive layer as dispersion is arbitrarily determined on the basis of the light diffusivity and the like. However, in general from the point of securing adhesive strength, the amount thereof is 5 to 200 parts by weight based on 100 parts by weight of the pressure-sensitive adhesive composition (solid content), preferably 10 to 150 parts by weight, more preferably 15 to 100 parts by weight.

As described above, by dispersing fine particles in the pressure-sensitive adhesive composition (the pressure-sensitive adhesive layer) or by exhibiting haze by formation of a domain by a polymerization product of an added monomer at the time of modification of a modified acrylic copolymer, such design to give diffusing function to the pressure-sensitive adhesives per se is possible, by which further dispersion effect of light can be brought about.

In addition, when the pressure-sensitive adhesive composition including the (meth)acrylic polymer is applied to a hydrophilic adherend such as glass, in order to heighten water resistance at the interface, 0.01 to 1 parts by weight of a silane coupling agent is blended based on 100 parts by weight of the(meth)acrylic polymer.

As the silane coupling agents, for example, epoxy group-containing silane coupling agents such as 3-glycidoxy-propyltrimethoxysilane, 3-glycidoxypropyltriethoxysilane, 3-glycidoxypropylmethyldiethoxysilane and 2-(3,4-epoxycyclohexyl)ethyltrimethoxysilane; amino group-containing silane coupling agents such as 3-aminopropyltrimethoxysilane, N-2-(aminoethyl)-3-aminopropylmethyldimethoxysilane, 3-triethoxysilyl-N-(1,3-dimethylbutylidene)propylamine and N-phenyl-3-aminopropyltrimethoxysilane; a (meth)acrylic group-containing silane coupling agent such as 3-acryloxypropyltrimethoxysilane and 3-methacryloxypropyltriethoxysilane; and an isocyanate group-containing silane coupling agent such as 3-isocyanatepropyltriethoxysilane may be mentioned. Using these silane coupling agents is preferred for improving durability.

The silane coupling agents may be used alone or in combination thereof as mixture. However, the content of the silane coupling agents as whole content is preferably 0.01 to 2 parts by weight based on 100 parts by weight of the (meth)acrylic polymer, more preferably 0.02 to 1 parts by weight. When the content of the silane coupling agent is less than 0.01 parts by weight, there are cases where the improvement of durability is insufficient, while when the content exceeds 2 parts by weight, there are cases where adhesive strength to optical members such as a liquid crystal cell and the like becomes excessively large and removability is inferior.

The pressure-sensitive adhesive composition may contain other conventional additives, for example, a vulcanizing agent, a tackifier, a colorant, powders such as a pigment, a dye, a surfactant, a plasticizer, a surface lubricant, a leveling agent, a softener, an antioxidant, an age resistor, a light stabilizer, a UV absorber, a polymerization inhibitor, an inorganic or organic fillers, metal powders, particulate matters or foil-like substances can be optionally added according to use purposes. Further, redoxes including reducing agents may be used within the range capable of control.

An optical sheet (an optical film) is used as the support for the pressure-sensitive adhesive composition, and the pressure-sensitive adhesive composition is coated on the support, and an optical sheet with a pressure-sensitive adhesive is obtained through drying and crosslinking treatment. The pressure-sensitive adhesive composition is generally coated on the support having been subjected to peeling treatment, dried, and transferred to various optical sheets. When the pressure-sensitive adhesive composition is coated and dried on a support having been subjected to emboss process and peeling treatment and transferred to an optical sheet, the surface of the pressure-sensitive adhesive layer can be roughened, and foams are liable to come out when stuck on an adherend for outgoing light.

As the coating methods, coating methods with a reverse coater, a comma coater, a lip coater and a die coater are optionally used so that a thickness of the pressure-sensitive adhesive after ordinary drying is 2 to 500 $\mu$m, preferably 5 to 100 $\mu$m.

The optical sheet with a pressure-sensitive adhesive in the invention forms a pressure-sensitive adhesive layer having the above-mentioned constitution in the backlight system on one surface of the optical film. Since the optical sheet with a pressure-sensitive adhesive in the invention is provided with the pressure-sensitive adhesive layer having the above-mentioned function, the effect capable of efficiently outgoing light can be revealed without shutting the light from the light source in.

Such a optical sheet with a pressure-sensitive adhesive in the invention of this sort is used stuck on an adherend from the underside of which light is irradiated. By taking the constitution that the refractive index of the pressure-sensitive adhesive layer is higher than that of the surface of the adherend from which light comes out, and further the refractive index of the optical sheet is higher than that of the pressure-sensitive adhesive layer, there is no reflection between each layer, so that outgoing light is not lost and light can efficiently go out. The invention has found such an efficient method of going out of light.

On the other hand, even when there is minute unevenness on the surface of the light source and light is lost, by sticking the optical sheet having the pressure-sensitive adhesive layer in the invention, light can efficiently go out. This is probably due to the fact that the pressure-sensitive adhesive gets in the uneven parts for softness thereof, to remove dragging of air, and at the same time by the effect that the refractive index is high.

Further, the effect of suppressing dispersion of light emission luminance as seen in FED system can also be expected.

On the other hand, the manufacturing method of the backlight system in the invention has a feature that a process of joining the adherend for outgoing light and the optical film having been subjected to embossing or roughening processing treatment to increase the surface area through the pressure-sensitive adhesive layer is included, and the backlight system capable of greatly improving luminance of outgoing light can be easily manufactured.

Further, a method for improving the luminance of outgoing light of the invention has a feature that the above-mentioned backlight system is used, and the luminance of outgoing light can be widely improved very simply.

Examples

The construction and advantage of the invention will be described specifically with reference to examples. Only those falling within the scope of the claims are embodiments of the claimed invention. The items of evaluation in the examples are as follows.

Example 1

233 parts by weight of ethyl acetate as a solvent, 98 parts by weight of butyl acrylate, 1.0 part by weight of acrylic acid, 1.0 part by weight of 4-hydroxybutyl acrylate, and 0.1 parts by weight of 2,2'-azobisisobutyronitrile were added into a reaction vessel equipped with a cooling pipe, a nitrogen-introducing pipe, a thermometer and a stirrer. After performing nitrogen substitution, the temperature was raised to 55°C and polymerization reaction was performed for 15 hours. A solution of a (meth)acrylic polymer having a weight average molecular weight of 970,000 was obtained. The refractive index of the (meth)acrylic polymer was 1.46.

40 parts by weight of a styrene oligomer (a softening point: 72-77°C, a weight average molecular weight: 1,350, a refractive index: 1.59, manufactured by Eastman Chemical Company, Piccolastic A75) was added as a tackifier to 100 parts by weight of the solid content of the (meth)acrylic polymer. Further, 0.1 parts by weight of an isocyanurate trimer of hexamethylene diisocyanate (manufactured by MITSUI CHEMICALS POLYURETHANES INC., Takenate D-170N), and 0.1 parts by weight of 3-glycidoxypropyltrimethoxysilane were added to prepare a pressure-sensitive adhesive composition of the invention.

The pressure-sensitive adhesive composition was coated on 38 $\mu$m thick PET having been subjected to silicone releasing treatment so that a dry thickness of the pressure-sensitive adhesive is 15 $\mu$m, dried and crosslinked at 120°C for 3 minutes to obtain a pressure-sensitive adhesive layer including the (meth)acrylic polymer which has the gel fraction of 69 wt% and a refractive index of 1.50.

Further, a polystyrene solution was prepared by dissolving 20 parts by weight of a polystyrene resin (manufactured by PS Japan Corporation, HH105) in 100 parts by weight of toluene.

In the next place, the polystyrene solution was coated on the surface of a 24 $\mu$m thick polyester (manufactured by Teijin Du Pont Films Japan Limited, PET film G2, a refractive index: 1.50) to form a polystyrene layer (a refractive index: 1.59, a thickness after curing: 5 $\mu$m), and the polystyrene layer was processed by hot press at 160°C to obtain a microlens (f number: 0.86) having a radius of 5 $\mu$m. Subsequently, the above-mentioned pressure-sensitive adhesive layer was transferred to the polyester film side, and an optical sheet with the pressure-sensitive adhesive layer in Example 1 was obtained.

Example 2

A pressure-sensitive adhesive layer including the (meth)acrylic polymer which has the gel fraction of 68 wt% and a refractive index of 1.52 was obtained in the same manner as in Example 1 except that 80 parts by weight of a styrene oligomer (a softening point: 82 to 85, a weight average molecular weight: 1,380, a refractive index: 1.60, manufactured by YASUHARA CHEMICAL CO., LTD., SX-85) was used as the tackifier. Further, the pressure-sensitive adhesive layer was transferred to the polyester film side of the microlens described in Example 1, and an optical sheet with the pressure-sensitive adhesive layer in Example 2 was obtained.

Example 3

30 parts by weight of styrene and 0.15 parts by weight of benzoyl peroxide as the polymerization initiator were added to 100 parts by weight of the solid content of the (meth)acrylic polymer in Example 1. Further, graft polymerization was carried out at 60°C for 5 hours and 70°C for 8 hours while substituting the reaction vessel with nitrogen to obtain a modified (meth)acrylic polymer. The refractive index of the modified (meth)acrylic polymer was 1.47.

80 parts by weight of a copolymer of $\alpha$-methylstyrene and styrene (a softening point: 82-88°C, a weight average molecular weight: 1,200, a refractive index: 1.61, manufactured by Eastman Chemical Company, Kristalex 3085), 0.15 parts by weight of a tolylene diisocyanate addition product of trimethylolpropane (manufactured by Nippon Polyurethane Industry Co., Ltd., Coronate L), and 0.1 parts by weight of 3-glycidoxypropyl- triethoxysilane were added to 100 parts by weight of the modified (meth)acrylic polymer to obtain a pressure-sensitive adhesive composition of the invention.

The pressure-sensitive adhesive composition was coated on 38 $\mu$m thick PET having been subjected to silicone releasing treatment so that a dry thickness of the pressure-sensitive adhesive is 15 $\mu$m, dried and crosslinked at 120°C for 3 minutes to obtain a pressure-sensitive adhesive layer including the (meth)acrylic polymer which has the gel fraction of 67 wt% and a refractive index of 1.53. Further, the pressure-sensitive adhesive layer was transferred to the polyester film side of the microlens described in Example 1, and an optical sheet with the pressure-sensitive adhesive layer in Example 3 was obtained.

Example 4

A pressure-sensitive adhesive layer including the (meth)acrylic polymer which has the gel fraction of 67 wt% and a refractive index of 1.51 was obtained in the same manner as in Example 3 except that 40 parts by weight of styrene oligomer (a softening point: 82-85°C, a weight average molecular weight: 1,380, a refractive index: 1.60, manufactured by YASUHARA CHEMICAL CO., LTD., SX-85) as the tackifier was added to 100 parts by weight of the modified (meth)acrylic polymer in Example 3. Further, the pressure-sensitive adhesive layer was transferred to the polyester film side of the microlens described in Example 1, and an optical sheet with the pressure-sensitive adhesive layer in Example 4 was obtained.

Example 5

233 parts by weight of ethyl acetate as a solvent, 98.5 parts by weight of butyl acrylate, 0.5 parts by weight of acrylic acid, 1.0 parts by weight of 4-hydroxybutyl acrylate, and 0.1 parts by weight of 2,2'-azobisisobutyronitrile were added into a reaction vessel equipped with a cooling pipe, a nitrogen-introducing pipe, a thermometer and a stirrer. After performing nitrogen substitution, the temperature was raised to 55°C and polymerization reaction was performed for 15 hours. A solution of a (meth)acrylic polymer having a weight average molecular weight of 1,120,000 was obtained.

50 parts by weight of styrene, 2.5 parts by weight of 4-hydroxybutyl acrylate, and 0.25 parts by weight of benzoyl peroxide as the polymerization initiator were added to 100 parts by weight of the solid content of the (meth)acrylic polymer. Further, graft polymerization was carried out at 60°C for 5 hours and 70°C for 8 hours while substituting the reaction vessel with nitrogen to obtain a modified (meth)acrylic polymer. The refractive index of the modified (meth)acrylic polymer was 1.48.

80 parts by weight of a styrene oligomer (a softening point: 82-85°C, a weight average molecular weight: 1,380, a refractive index: 1.60, manufactured by YASUHARA CHEMICAL CO., LTD., SX-85), 0.15 parts by weight of a tolylene diisocyanate addition product of trimethylolpropane (manufactured by Nippon Polyurethane Industry Co., Ltd., Coronate L), and 0.1 parts by weight of 3-glycidoxypropyltriethoxysilane were added to 100 parts by weight of the modified (meth)acrylic polymer, to obtain a pressure-sensitive adhesive composition of the invention.

The pressure-sensitive adhesive composition was coated on 38 $\mu$m thick PET having been subjected to silicone releasing treatment so that a dry thickness of the pressure-sensitive adhesive is 15 $\mu$m, dried and crosslinked at 120°C for 3 minutes to obtain a pressure-sensitive adhesive layer including the (meth)acrylic polymer which has the gel fraction of 65 wt% and a refractive index of 1.53. Further, the pressure-sensitive adhesive layer was transferred to the polyester film side of the microlens described in Example 1, and an optical sheet with the pressure-sensitive adhesive layer in Example 5 was obtained.

Example 6

40 parts by weight of a copolymer of $\alpha$-methylstyrene and styrene (a softening point: 82-88°C, a weight average molecular weight: 1,200, a refractive index: 1.61, manufactured by Eastman Chemical Company, Kristalex 3085), 10 parts by weight of a styrene oligomer (a softening point: room temperature or lower, a weight average molecular weight: 430, a refractive index: 1.60, manufactured by Eastman Chemical Company, Piccolastic A5), 0.3 parts by weight of benzoyl peroxide, 0.05 parts by weight of an isophorone diisocyanate addition product of trimethylolpropane (manufactured by MITSUI CHEMICALS POLYURETHANES INC., Takenate D-140N), and 0.2 parts by weight of 3-glycidoxypropyltriethoxysilane were added to 100 parts by weight of the modified (meth)acrylic polymer in Example 5 to prepare a pressure-sensitive adhesive composition of the invention.

The pressure-sensitive adhesive composition was coated on 38 $\mu$m thick PET having been subjected to silicone releasing treatment so that a dry thickness of the pressure-sensitive adhesive is 15 $\mu$m, dried and crosslinked at 140°C for 3 minutes to obtain a pressure-sensitive adhesive layer including the (meth)acrylic polymer which has the gel fraction of 60 wt% and a refractive index of 1.52.

The pressure-sensitive adhesive layer was stuck on a 100 $\mu$m thick light diffusing sheet to obtain an optical sheet with the pressure-sensitive adhesive layer in Example 6.

Example 7

An optical sheet with a pressure-sensitive adhesive layer in Example 7 (the refractive index of a pressure-sensitive adhesive: 1.46, the gel fraction of the (meth)acrylic polymer: 70 wt%) was prepared in the same manner as in Example 1 except that the tackifier was not added.

Example 8

A pressure-sensitive adhesive layer including the (meth)acrylic polymer which has the gel fraction of 68 wt% and a refractive index of 1.54 was obtained in the same manner as in Example 5 except that 40 parts by weight of styrene and 10 parts by weight of acryloyl morpholine were used in graft polymerization reaction of the modified (meth)acrylic polymer in Example 5. Further, the pressure-sensitive adhesive layer was transferred to the polyester film side of the microlens described in Example 1, and an optical sheet with the pressure-sensitive adhesive layer in Example 8 was obtained.

Example 9

233 parts by weight of ethyl acetate as a solvent, 92 parts by weight of butyl acrylate, 2 parts by weight of acrylic acid, 1 part by weight of 4-hydroxybutyl acrylate, 5 parts by weight of acryloylmorpholine, and 0.1 parts by weight of 2,2'-azobisiso-butyronitrile were added into a reaction vessel equipped with a cooling pipe, a nitrogen-introducing pipe, a thermometer and a stirrer. After performing nitrogen substitution, the temperature was raised to 55°C and polymerization reaction was performed for 15 hours. A solution of a (meth)acrylic polymer having a weight average molecular weight of 1,180,000 was obtained. The refractive index of the (meth)acrylic polymer was 1.47.

40 parts by weight of a styrene oligomer (a softening point: 72-77°C, a weight average molecular weight: 1,350, a refractive index: 1.59, manufactured by Eastman Chemical Company, Piccolastic A75) was added as a tackifier to 100 parts by weight of the solid content of the (meth)acrylic polymer. Further, 0.1 parts by weight of a hexamethylene diisocyanate addition product of trimethylolpropane (manufactured by MITSUI CHEMICALS POLYURETHANES INC., Takenate D-160N), and 0.1 parts by weight of 3-glycidoxypropyltrimethoxysilane were added to prepare a pressure-sensitive adhesive composition of the invention.

The pressure-sensitive adhesive composition was coated on 38 $\mu$m thick PET having been subjected to silicone releasing treatment so that a dry thickness of the pressure-sensitive adhesive is 15 $\mu$m, dried and crosslinked at 120°C for 3 minutes to obtain a pressure-sensitive adhesive layer including the (meth)acrylic polymer which has the gel fraction of 66 % and a refractive index of 1.51. Further, the pressure-sensitive adhesive layer was transferred to the polyester film side of the microlens described in Example 1, and an optical sheet with the pressure-sensitive adhesive layer in Example 9 was obtained.

Example 10

30 parts by weight of styrene and 0.15 parts by weight of benzoyl peroxide as the polymerization initiator were added to 100 parts by weight of the solid content of the (meth)acrylic polymer in Example 9. Further, graft polymerization was carried out at 60°C for 5 hours and 70°C for 8 hours while substituting the reaction vessel with nitrogen to obtain a modified (meth)acrylic polymer. The refractive index of the modified (meth)acrylic polymer was 1.48.

80 parts by weight of a copolymer of $\alpha$-methylstyrene and styrene (a softening point: 82-88°C, a weight average molecular weight: 1,200, a refractive index: 1.61, manufactured by Eastman Chemical Company, Kristalex 3085), 0.1 parts by weight of a tolylene diisocyanate addition product of trimethylolpropane (manufactured by Nippon Polyurethane Industry Co., Ltd., Coronate L), and 0.1 parts by weight of 3-glycidoxypropyl- triethoxysilane were added to 100 parts by weight of the modified (meth)acrylic polymer to obtain a pressure-sensitive adhesive composition.

The pressure-sensitive adhesive composition was coated on 38 $\mu$m thick PET having been subjected to silicone releasing treatment in a dry thickness of 15 $\mu$m of the pressure-sensitive adhesive, dried and crosslinked at 120°C for 3 minutes to obtain a pressure-sensitive adhesive layer including the (meth)acrylic polymer which has the gel fraction of 63 % and a refractive index of 1.54. Further, the pressure-sensitive adhesive layer was transferred to the polyester film side of the microlens described in Example 1, and an optical sheet with the pressure-sensitive adhesive layer in Example 10 was obtained.

Example 11

A pressure-sensitive adhesive layer including the (meth)acrylic polymer which has the gel fraction of 70 wt% and a refractive index of 1.54 was obtained in the same manner as in Example 8 except that N,N-dimethylacrylamide was used in place of acryloyl- morpholine in graft polymerization reaction of the modified (meth)acrylic polymer in Example 8. Further, the pressure-sensitive adhesive layer was transferred to the polyester film side of the microlens described in Example 1, and an optical sheet with the pressure-sensitive adhesive layer in Example 11 was obtained.

Example 12

233 parts by weight of ethyl acetate as a solvent, 99 parts by weight of butyl acrylate, 0.5 parts by weight of acrylic acid, 0.5 parts by weight of 4-hydroxybutyl acrylate, and 0.1 parts by weight of 2,2'-azobisisobutyronitrile were added into a reaction vessel equipped with a cooling pipe, a nitrogen-introducing pipe, a thermometer and a stirrer. After performing nitrogen substitution, the temperature was raised to 55°C and polymerization reaction was performed for 15 hours. A solution of a (meth)acrylic polymer having a weight average molecular weight of 1,030,000 was obtained.

40 parts by weight of styrene and 2 parts by weight of 4-hydroxybutyl acrylate were added to 100 parts by weight of the solid content of the (meth)acrylic polymer. 0.20 parts by weight of benzoyl peroxide was further added as the polymerization initiator, and graft polymerization was carried out at 60°C for 5 hours and 70°C for 8 hours while substituting the reaction vessel with nitrogen to obtain a modified (meth)acrylic polymer. The refractive index of the modified (meth)acrylic polymer was 1.47.

60 parts by weight of a copolymer of α-methylstyrene and styrene (a softening point: 82-88°C, a weight average molecular weight: 1,200, a refractive index: 1.61, manufactured by Eastman Chemical Company, Kristalex 3085), 0.2 parts by weight of a xylylene diisocyanate addition product of trimethylolpropane (manufactured by MITSUI CHEMICALS POLYURETHANES INC., Takenate D-110N), and 0.1 parts by weight of 3-glycidoxypropyltriethoxysilane were blended with 100 parts by weight of the solid content of the (meth)acrylic polymer to prepare a pressure-sensitive adhesive composition.

The pressure-sensitive adhesive composition was coated on 38 μm thick PET having been subjected to silicone releasing treatment so that a dry thickness of the pressure-sensitive adhesive is 15 μm, dried and crosslinked at 120°C for 3 minutes to obtain a pressure-sensitive adhesive layer including the (meth)acrylic polymer which has the gel fraction of 74 wt% and a refractive index of 1.52. Further, the pressure-sensitive adhesive layer was transferred to the polyester film side of the microlens described in Example 1, and an optical sheet with the pressure-sensitive adhesive layer in Example 12 was obtained.

Example 13

80 parts of a styrene oligomer (a softening point: 82 to 85°C, a weight average molecular weight: 1,380, a refractive index: 1.60, manufactured by YASUHARA CHEMICAL CO., LTD., SX-85), 0.15 parts of a hydrogenated xylylene diisocyanate addition product of trimethylolpropane (manufactured by MITSUI CHEMICALS POLYURETHANES INC., Takenate D-120N), and 0.1 parts by weight of 3-glycidoxypropyl- triethoxysilane were blended with 100 parts by weight of the modified (meth)acrylic polymer in Example 12 to obtain a pressure-sensitive adhesive composition.

The pressure-sensitive adhesive composition was coated on 38 μm thick PET having been subjected to silicone releasing treatment so that a dry thickness of the pressure-sensitive adhesive is 15 μm, dried and crosslinked at 120°C for 3 minutes to obtain a pressure-sensitive adhesive layer including the (meth)acrylic polymer which has the gel fraction of 71 wt% and a refractive index of 1.53. Further, the pressure-sensitive adhesive layer was transferred to the polyester film side of the microlens described in Example 1, and an optical sheet with the pressure-sensitive adhesive layer in Example 13 was obtained.

Example 14

233 parts by weight of ethyl acetate as a solvent, 99 parts by weight of butyl acrylate, 1 part by weight of 4-hydroxybutyl acrylate, and 0.1 parts by weight of 2,2'-azobisisobutyronitrile were added into a reaction vessel equipped with a cooling pipe, a nitrogen-introducing pipe, a thermometer and a stirrer. After performing nitrogen substitution, the temperature was raised to 55°C and polymerization reaction was performed for 15 hours. A solution of a (meth)acrylic polymer having a weight average molecular weight of 930,000 was obtained.

50 parts by weight of styrene and 2.5 parts by weight of 4-hydroxybutyl acrylate were added to 100 parts by weight of the solid content of the (meth)acrylic polymer. 0.25 parts by weight of benzoyl peroxide was further added as the polymerization initiator, and graft polymerization was carried out at 60°C for 5 hours and 70°C for 8 hours while substituting the reaction vessel with nitrogen to obtain a modified (meth)acrylic polymer. The refractive index of the modified (meth)acrylic polymer was 1.48.

80 parts by weight of a styrene oligomer (a softening point: 82 to 85°C, a weight average molecular weight: 1,380, a refractive index: 1.60, manufactured by YASUHARA CHEMICAL CO., LTD., SX-85), 1 part by weight of a xylylene diisocyanate addition product of trimethylolpropane (manufactured by MITSUI CHEMICALS POLYURETHANES INC., Takenate D-110N), and 0.1 parts by weight of 3-glycidoxypropyl- triethoxysilane were blended with 100 parts by weight of the solid content of the (meth)acrylic polymer to prepare a pressure-sensitive adhesive composition.

The pressure-sensitive adhesive composition was coated on 38 μm thick PET having been subjected to silicone releasing treatment so that a dry thickness of the pressure-sensitive adhesive is 15 μm, dried and crosslinked at 120°C for 3 minutes to obtain a pressure-sensitive adhesive layer including the (meth)acrylic polymer which has the gel fraction of 82 wt% and a refractive index of 1.53. Further, the pressure-sensitive adhesive layer was transferred to the polyester film side of the microlens described in Example 1, and an optical sheet with the pressure-sensitive adhesive layer in Example 14 was obtained.

Example 15

40 parts by weight of styrene and 2 parts by weight of 4-hydroxybutyl acrylate were added to 100 parts by weight of the solid content of the (meth)acrylic polymer in Example 14. 0.20 parts by weight of benzoyl peroxide was further added as the polymerization initiator, and graft polymerization reaction was carried out at 60°C for 5 hours and 70°C for 8 hours while substituting the reaction vessel with nitrogen to obtain a modified (meth)acrylic polymer. The refractive index of the modified (meth)acrylic polymer was 1.47.

60 parts by weight of a copolymer of α-methylstyrene and styrene (a softening point: 82 to 88°C, a weight average molecular weight: 1,200, a refractive index: 1.61, manufactured by Eastman Chemical Company, Kristalex 3085), 0.7 parts by weight of a hydrogenated xylylene diisocyanate addition product of trimethylolpropane (manufactured by MITSUI CHEMICALS POLYURETHANES INC., Takenate D-120N), and 0.1 parts by weight of 3-glycidoxypropyltriethoxysilane were blended with 100 parts by weight of the solid content of the modified (meth)acrylic polymer to obtain a pressure-sensitive adhesive composition.

The pressure-sensitive adhesive composition was coated on 38 μm thick PET having been subjected to silicone releasing treatment in a dry thickness of 15 μm of the pressure-sensitive adhesive, dried and crosslinked at 120°C for 3 minutes to obtain a pressure-sensitive adhesive layer including the (meth)acrylic polymer which has the gel fraction of 80 wt% and a refractive index of 1.52.

Further, the pressure-sensitive adhesive layer was transferred to the polyester film side of the microlens described in Example 1, and an optical sheet with the pressure-sensitive adhesive layer in Example 15 was obtained.

Example 16

30 parts by weight of the particles of melamine-formaldehyde condensation product (manufactured by Nippon Shokubai Co., Ltd., EPOSTAR S6) was added as light transmitting non-colored particles based on 100 parts by weight of modified (meth)acrylic polymer to the pressure-sensitive adhesive composition in Example 5, and made homogeneous to obtain a pressure-sensitive adhesive composition of the invention.

The pressure-sensitive adhesive composition was made homogeneous and coated on 38 μm thick PET having been subjected to silicone releasing treatment in a dry thickness of 15 μm of the pressure-sensitive adhesive, dried and crosslinked at 120°C for 3 minutes to obtain a pressure-sensitive adhesive layer including the (meth)acrylic polymer which has the gel fraction of 60 wt% and a refractive index of 1.53. Further, the pressure-sensitive adhesive layer was transferred to the polyester film side of the microlens described in Example 1, and an optical sheet with the pressure-sensitive adhesive layer in Example 16 was obtained.

Example 17

30 parts by weight of phenoxyethyl acrylate and 1.5 parts by weight of 4-hydroxybutyl acrylate were added to 100 parts by weight of the solid content of the (meth)acrylic polymer in Example 14. 0.15 parts by weight of benzoyl peroxide was further added as a polymerization initiator, and graft polymerization reaction was carried out at 60°C for 5 hours and 70°C for 8 hours while substituting the reaction vessel with nitrogen to obtain a modified (meth)acrylic polymer. The refractive index of the modified (meth)acrylic polymer was 1.48.

40 parts by weight of a styrene oligomer (a softening point: 82 to 85°C, a weight average molecular weight: 1,380, a refractive index: 1.60, manufactured by YASUHARA CHEMICAL CO., LTD., SX-85), 0.5 parts by weight of a xylylene diisocyanate addition product of trimethylolpropane (manufactured by MITSUI CHEMICALS POLYURETHANES INC., Takenate D-110N), and 0.1 parts by weight of 3-glycidoxypropyl-triethoxysilane were blended with 100 parts by weight of the solid content of the (meth)acrylic polymer to prepare a pressure-sensitive adhesive composition.

The pressure-sensitive adhesive composition was coated on 38 μm thick PET having been subjected to silicone releasing treatment in a dry thickness of 15 μm of the pressure-sensitive adhesive, dried and crosslinked at 120°C for 3 minutes to obtain a pressure-sensitive adhesive layer including the (meth)acrylic polymer which has the gel fraction of 75 wt% and a refractive index of 1.52. Further, the pressure-sensitive adhesive layer was transferred to the polyester film side of the microlens described in Example 1, and an optical sheet with the pressure-sensitive adhesive layer in Example 17 was obtained.

Example 18

30 parts by weight of benzyl acrylate and 1.5 parts by weight of 4-hydroxybutyl acrylate were added to 100 parts by weight of the solid content of the (meth)acrylic polymer in Example 14. 0.15 parts by weight of benzoyl peroxide was further added as the polymerization initiator, and graft polymerization reaction was carried out at 60°C for 5 hours and 70°C for 8 hours while substituting the reaction vessel with nitrogen to obtain a modified (meth)acrylic polymer. The refractive index of the modified (meth)acrylic polymer was 1.48.

80 parts by weight of a styrene oligomer (a softening point: 82 to 85°C, a weight average molecular weight: 1,380, a refractive index: 1.60, manufactured by YASUHARA CHEMICAL CO., LTD., SX-85), 1.0 part by weight of a tolylene diisocyanate addition product of trimethylolpropane (manufactured by Nippon Polyurethane Industry Co., Ltd., Coronate L), and 0.1 parts by weight of 3-glycidoxypropyl-triethoxysilane were blended with 100 parts by weight of the solid content of the (meth)acrylic polymer to prepare a pressure-sensitive adhesive composition.

The pressure-sensitive adhesive composition was coated on 38 $\mu$m thick PET having been subjected to silicone releasing treatment so that a dry thickness of the pressure-sensitive adhesive is 15 $\mu$m, dried and crosslinked at 120°C for 3 minutes to obtain a pressure-sensitive adhesive layer including the (meth)acrylic polymer which has the gel fraction of 81 wt% and a refractive index of 1.54. Further, the pressure-sensitive adhesive layer was transferred to the polyester film side of the microlens described in Example 1, and an optical sheet with the pressure-sensitive adhesive layer in Example 18 was obtained.

Comparative Example 1

An optical sheet with a pressure-sensitive adhesive layer was not stuck on a light source, and three of the diffusing plate, BEF, and diffusing plate provided on the backlight were put on as they were, and evaluated as the optical sheet in Comparative Example 1.

Comparative Example 2

The operation of Example 1 was repeated except that the amount of the isocyanate crosslinking agent was changed to 0.5 parts by weight. The gel fraction of the (meth)acrylic polymer was 93 wt%.

Comparative Example 3

The operation of Example 1 was repeated except that the amount of the isocyanate crosslinking agent was changed to 0.02 parts by weight. The gel fraction of the (meth)acrylic polymer was 30 wt%.
The optical sheets (the optical sheets with the pressure-sensitive adhesive) obtained in examples and comparative examples were evaluated as follows. The results obtained are shown in Table 1.

Measurement of molecular weight

The weight average molecular weight of each of the obtained (meth)acrylic polymers was measured by GPC (gel permeation chromatography).

- Analyzer: HLC-8120GPC, manufactured by TOSOH CORPORATION
- Column: G7000HXL + GMHXL - H + GMHXL, manufactured by TOSOH CORPORATION
- Column of low molecular weight substance: GMHHR - H + GMHHR + G2000MHHR, manufactured by TOSOH CORPORATION
- Size of column: each 7.8 mm$\Phi$ $\times$ 30 cm (total 90 cm)
- Temperature of column: 40°C
- Flow rate: 0.8 ml/min
- Injection rate: 100 $\mu$l
- Eluent: tetrahydrofuran
- Detector: Differential refractometer (RI)

Molecular weight was calculated as polystyrene equivalent.

Measurement of gel fraction

The weight (Wlg) of each of the pressure-sensitive adhesive layers manufactured in Examples and Comparative Examples was taken out, and immersed in ethyl acetate at room temperature (about 25°C) for 7 days. After that, the immersion treated pressure-sensitive adhesive layer (insoluble content) was taken out from the ethyl acetate, and the weight (W2g) after drying at 130°C for 2 hours was measured.
Calculation was performed according to the following expression, taking the number of the parts by weight of the tackifier to 100 parts by weight of the pressure-sensitive adhesive polymer ((meth)acrylic polymer) at the time of blending of the adhesion as A:

```
Gel proportion (wt%) = (W2/W1) × (100 + A)
```

Incidentally, in Examples and Comparative Examples, the tackifiers were not taken into the crosslinking structures of the polymers and completely dissolved in the state of being immersed in ethyl acetate.

Measurement of adhesive strength

A polyester pressure-sensitive adhesive tape (manufactured by NITTO DENKO CORPORATION, No. 31B) was stuck on each of the surfaces having been subjected to embossing or roughening processing treatment of the optical sheets which were obtained in Examples and Comparative Examples (25 mm in width) as lining, which was adhered on no-alkali glass with a 2 kg roller by one time of going and returning of the roller. Subsequently, each optical sheet was treated in an autoclave at 50°C and 0.5 MPa for 30 minutes, allowed to stand in an atmosphere of 23°C, 50% RH for 3 hours, and then peeling adhesion (N/20 mm) was measured by peeling angle of 90° and peeling rate of 300 mm/min.
Further, after the autoclave treatment, the test sample was stored at 60°C for 6 hours, and after being allowed to stand in an atmosphere of 23°C, 50% RH for 3 hours, peeling adhesion was measured by peeling angle of 90° and peeling rate of 300 mm/min, and the obtained value was taken as adhesive strength after heating (N/20 mm).

Measurement of refractive index

Under an atmosphere of 25°C, sodium D-line (589 nm) was irradiated, and a refractive index was measured with Abbe's refractometer (manufactured by ATAGO, CO., Ltd., DR-M2).

Measurement of luminance

The above-mentioned optical sheet with the pressure-sensitive adhesive layer was stuck on the light guiding plate on the backlight of a 17-inch color display (Sync Master 712N, manufactured by SAMSUNG JAPAN CORPORATION), as the construction of the backlight system (light source) including lamination in order of an adherend for outgoing light and a pressure-sensitive adhesive layer, and on the opposite side, an optical film having been subjected to embossing or roughening processing treatment to increase the surface area. Further, three of the diffusing plate, BEF and diffusing plate used in the display were piled together as they were. As the luminance meter, BM-9 manufactured by TOPCON TECHNOHOUSE Co. was used. The distance between the light source and the luminance meter was 350 mm. The luminance meter was adjusted to the center of the light source shielding the light other than the part of 20 mm square, and luminance was measured (cd/cm$^2$) in a dark room.

Measurement of dynamic viscoelasticity

Dynamic viscoelasticity was measured on the following conditions.

- Apparatus: manufactured by T.A. Instrument, ARES
- Deformation mode: twisting
- Measurement frequency: constant frequency of 1 Hz
- Temperature increasing rate: 5°C/min
- Measurement temperature: measured from around the glass transition temperature of a pressure-sensitive adhesive to 160°C
- Form: parallel plate 8.0 mmΦ
- Thickness of a sample: 0.5 to 2 mm (at initial time of mounting)

Storage elastic modulus (G') at 23°C was read.
In the invention, pressure-sensitive adhesives having storage elastic modulus (G') at 23°C measured in dynamic viscoelasticity of 10,000 to 1,000,000 Pa, preferably 30,000 to 500,000 Pa, more preferably 40,000 to 400,000 Pa are used. When storage elastic modulus (G') is excessively small, there are cases where the pressure-sensitive adhesive is forced out, or processability and workability deteriorate, while when storage elastic modulus (G') is excessively large, adhesiveness lowers, so that not preferred.
By making a storage elastic modulus (G') in the above-mentioned range, a release film can be peeled from the optical sheet with a pressure-sensitive adhesive of the invention and simply and easily stuck on an adherend at room temperature, so that workability is largely improved. The results of measurement of storage elastic modulus are shown below.

(Example 1) 70,000 Pa
(Example 2) 85,000 Pa
(Example 3) 155,000 Pa

(Example 4) 104,000 Pa
(Example 5) 202,000 Pa
(Example 6) 116,000 Pa
(Example 7) 132,000 Pa
(Example 8) 264,000 Pa
(Example 9) 170,000 Pa
(Example 10) 272,000 Pa
(Example 11) 255,000 Pa
(Example 12) 133,000 Pa
(Example 13) 146,000 Pa
(Example 14) 196,000 Pa
(Example 15) 188,000 Pa
(Example 16) 292,000 Pa
(Example 17) 104,000 Pa
(Example 18) 96,000 Pa

Foaming test at the time of sticking on an acryl plate

The pressure-sensitive adhesive surface of each of the optical sheets with pressure-sensitive adhesives obtained in Examples and Comparative Examples was stuck on an acryl plate (manufactured by Sumitomo Chemical Co., Ltd., SUMIPEX E00, a thickness: 2 mm). After the treatment in an autoclave at 50°C and 0.5 MPa for 30 minutes, the acryl plate was put in a dryer at 70°C and 80°C, and observed for the presence of foaming after 24 hours.

In Examples 1 to 18, foaming was not observed both at 70°C and 80°C. On the other hand, in Comparative Examples 2 and 3, foaming was observed at 80°C, although foaming was not observed at 70°C.

The results of the measurement and the evaluations are shown in Table 1.

Table 1

|  | Adhesion | Adhesion (after heating) | Luminance | Foaming Test (80°C) |
|---|---|---|---|---|
| Example 1 | 8.0 | 8.2 | 781 | ○ |
| Example 2 | 12.3 | 13.5 | 793 | ○ |
| Example 3 | 8.3 | 8.5 | 810 | ○ |
| Example 4 | 5.6 | 5.8 | 765 | ○ |
| Example 5 | 10.2 | 10.3 | 820 | ○ |
| Example 6 | 8.3 | 9.2 | 822 | ○ |
| Example 7 | 3.6 | 4.5 | 680 | ○ |
| Example 8 | 7.2 | 7.5 | 825 | ○ |
| Example 9 | 10.0 | 10.2 | 790 | ○ |
| Example 10 | 8.8 | 9.4 | 828 | ○ |
| Example 11 | 7.7 | 8.3 | 822 | ○ |
| Example 12 | 6. 6 | 7.0 | 788 | ○ |
| Example 13 | 7.9 | 8.5 | 810 | ○ |
| Example 14 | 5.0 | 5.5 | 815 | ○ |
| Example 15 | 6.4 | 6.8 | 800 | ○ |
| Example 16 | 4.5 | 4.6 | 840 | ○ |
| Example 17 | 7.5 | 8.8 | 804 | ○ |
| Example 18 | 7.3 | 8.5 | 825 | ○ |
| Comparative Example 1 | - | - | 469 | - |
| Comparative Example 2 | 7.5 | 8.0 | 780 | × |

(continued)

|  | Adhesion | Adhesion (after heating) | Luminance | Foaming Test (80°C) |
|---|---|---|---|---|
| Comparative Example 3 | 13.6 | 17.2 | 780 | × |

From the results shown in Table 1, it can be seen that all of the optical sheets with pressure-sensitive adhesives obtained in Examples 1 to 18 were excellent in adhesiveness and luminance was greatly improved.

While the invention has been described in detail and with reference to specific examples thereof, it will be apparent to one skilled in the art that various changes and modifications can be made therein without departing from the scope of the appended claims.

The present application is related to Japanese patent applications filed on February 28, 2007 (Japanese Patent Application No. 2007-049883), and February 5, 2008 (Japanese Patent Application No. 2008-025416).

INDUSTIRAL APPLICABILITY

The backlight system and the optical sheet with a pressure-sensitive adhesive which is used in the backlight system of the invention are, as described above, greatly improved in luminance by sticking the opposite side (the side not subjected to roughening treatment)to the side of the optical film having been subjected to embossing or roughening processing treatment to increase the surface area of the microlens and the light diffusing plate on the light guiding plate for outgoing the light from the illuminant, a sealing member or a light source unit through a pressure-sensitive adhesive. Further, the technique contributes to energy saving and long term of life.

## Claims

1. An optical sheet with a pressure-sensitive adhesive, wherein the optical sheet with a pressure-sensitive adhesive comprises an optical film (10, 12) subjected to embossing or roughening processing treatment so as to increase the surface area thereof and a pressure-sensitive adhesive layer (20) laminated on the outermost layer of the optical film, wherein the optical film (10, 12) is at least one of a microlens and a light diffusing plate,
   **characterized in that**
   the pressure-sensitive adhesive layer (20) contains a pressure-sensitive adhesive polymer having a gel fraction of 35 to 85 wt %, measured as specified in the description, and
   the pressure-sensitive adhesive layer (20) is a (meth)acrylic polymer copolymerized with 0.1 to 20 wt% of a nitrogen-containing monomer, 0.1 to 5 wt% of a carboxyl group-containing monomer, and 0.1 to 10 wt% of a hydroxyl group-containing monomer.

2. The optical sheet with a pressure-sensitive adhesive according to claim 1, wherein the pressure-sensitive adhesive layer (20) comprises a pressure-sensitive adhesive composition comprising 10 to 150 parts by weight of a tackifier having an aromatic ring, and 0.03 to 2 parts by weight of a crosslinking agent, based on 100 parts by weight of the (meth)acrylic polymer copolymerized with 0.1 to 10 wt% of a hydroxyl group-containing monomer.

3. The optical sheet with a pressure-sensitive adhesive according to claim 2, wherein the (meth)acrylic polymer is a modified (meth)acrylic polymer which is obtained by further copolymerizing a high refractive index monomer to the (meth)acrylic polymer copolymerized with 0.1 to 10 wt% of the hydroxyl group-containing monomer.

4. The optical sheet with a pressure-sensitive adhesive according to claim 2 or 3, wherein the pressure-sensitive adhesive composition further comprises 0.01 to 2 parts by weight of a silane coupling agent based on 100 parts by weight of the (meth)acrylic polymer.

5. The optical sheet with a pressure-sensitive adhesive according to any one of claims 2 to 4, wherein the (meth)acrylic polymer is a (meth)acrylic polymer copolymerized with 50 to 99 wt% of n-butyl (meth)acrylate.

6. The optical sheet with a pressure-sensitive adhesive according to any one of claims 1 to 5, wherein the pressure-sensitive adhesive layer is a pressure-sensitive adhesive layer (20) containing light transmitting non-colored particles dispersed therein to thereby show a light diffusing property.

7. The optical sheet with a pressure-sensitive adhesive according to any one of claims 1 to 6, wherein the pressure-sensitive adhesive layer (20) has a thickness of 2 to 500 μm.

8. A backlight system comprising:

an adherend for outgoing light, wherein the adherend is a light source (32), a light guide member (30), or a light source unit (3),
an optical sheet according to any one of claims 1-7,
wherein the adherend and the optical film (10, 12) are joined through the pressure-sensitive adhesive layer (20),
a side opposite to a side of the optical film (10, 12) subjected to embossing or roughening processing treatment is stuck over the adhered through the pressure-sensitive adhesive layer (20), and
the adherend has a refractive index which is smaller than a refractive index of the pressure-sensitive adhesive layer (20), and the pressure-sensitive adhesive layer (20) has the refractive index which is smaller than a refractive index of the optical film (10, 12).

9. The backlight system according to claim 8, wherein the optical film (10, 12) is a laminate of a plurality of optical films.

10. The backlight system according to claim 8 or 9, wherein the pressure-sensitive adhesive layer (20) has a storage elastic modulus at 23°C of 10,000 to 1,000,000 Pa.

11. The backlight system according to any one of claims 8 to 10, wherein the pressure-sensitive adhesive layer (20) has a refractive index of 1.50 or more.

12. An image display comprising the backlight system according to any one of claims 8 to 11.

13. An illuminating system comprising the backlight system according to any one of claims 8 to 11.

14. A process for producing the backlight system according to any of claims 8 to 11, said process comprising joining the adherend for outgoing light and the optical film (10, 12) subjected to embossing or roughening processing treatment so as to increase the surface area thereof, through the pressure sensitive adhesive layer (20).

15. A method for improving a luminance of outgoing light, said method comprising using the backlight system according to any one of claims 8 to 11.

**Patentansprüche**

1. Optische Folie mit einem druckempfindlichen Klebstoff, wobei die optische Folie mit einem druckempfindlichen Klebstoff einen optischen Film (10, 12), der Präge- oder Aufrauhungs-Bearbeitungsbehandlung unterzogen wird, um seine Flächenausdehnung zu vergrößern, und eine Schicht (20) aus druckempfindlichem Klebstoff umfasst, die auf die äußerste Schicht des optischen Films laminiert ist, wobei der optische Film (10, 12) eine Mikrolinse oder/und eine Lichtstreuplatte ist,
**dadurch gekennzeichnet, dass**
die Schicht (20) aus druckempfindlichem Klebstoff einen druckempfindlichen Polymer-Klebstoff mit einer Gel-Fraktion von 35 bis 85 Gew.-%, gemessen wie in der Beschreibung angegeben, enthält, und
die Schicht (20) aus druckempfindlichem Klebstoff ein mit 0,1 bis 20 Gew.-% eines stickstoffhaltigen Monomers, 0,1 bis 5 Gew.-% eines carboxylgruppenhaltigen Monomers sowie 0,1 bis 10 Gew.-% eines hydroxylgruppenhaltigen Monomers copolymerisiertes Methacryl-Polymer ist.

2. Optische Folie mit einem druckempfindlichen Klebstoff nach Anspruch 1, wobei die Schicht (20) aus druckempfindlichem Klebstoff eine druckempfindliche Klebstoff-Zusammensetzung umfasst, die 10 bis 150 Gewichtsteile eines Klebrigmachers mit einem aromatischen Kern sowie 0,03 bis 2 Gewichtsteile eines Vernetzungsmittels auf Basis von 100 Gewichtsteilen des mit 0,1 bis 10 Gew.-% eines hydroxylgruppenhaltigen Monomers copolymerisierten Methacryl-Polymers umfasst.

3. Optische Folie mit einem druckempfindlichen Klebstoff nach Anspruch 2, wobei das Methacryl-Polymer ein modifiziertes Methacryl-Polymer ist, das gewonnen wird, indem des Weiteren ein Monomer mit hohem Brechungsindex zu dem mit 0,1 bis 10 Gew.-% des hydroxylgruppenhaltigen Monomers copolymerisierten Methacryl-Polymer copolymerisiert wird.

**4.** Optische Folie mit einem druckempfindlichen Klebstoff nach Anspruch 2 oder 3, wobei die druckempfindliche Klebstoff-Zusammensetzung des Weiteren 0,01 bis 2 Gewichtsteile eines Silan-Haftmittels auf Basis von 100 Gewichtsteilen des Methacryl-Polymers umfasst.

**5.** Optische Folie mit einem druckempfindlichen Klebstoff nach einem der Ansprüche 2 bis 4, wobei das Methacryl-Polymer ein mit 50 bis 99 Gew.-% n-Butyl-Methacrylat copolymerisiertes Methacryl-Polymer ist.

**6.** Optische Folie mit einem druckempfindlichen Klebstoff nach einem der Ansprüche 1 bis 5, wobei die Schicht aus druckempfindlichen Klebstoff eine Schicht (20) aus druckempfindlichem Klebstoff ist, in der lichtdurchlässige, nichtgefärbte Teilchen dispergiert sind, so dass sie lichtstreuend wirkt.

**7.** Optische Folie mit einem druckempfindlichen Klebstoff nach einem der Ansprüche 1 bis 6, wobei die Schicht (20) aus druckempfindlichem Klebstoff eine Dicke von 2 bis 500 $\mu$m hat.

**8.** Hintergrundbeleuchtungssystem, das umfasst:

einen Schichtträger für austretendes Licht, wobei der Schichtträger eine Lichtquelle (32), ein Lichtleitelement (30) oder eine Lichtquelleneinheit (3) ist,
eine optische Folie nach den Ansprüchen 1-7,
wobei der Schichtträger und der optische Film (10, 12) über die Schicht (20) aus druckempfindlichem Klebstoff verbunden sind,
eine einer Seite des optischen Films (10, 12) gegenüberliegende Seite, die Präge- oder Aufrauhungs-Bearbeitungsbehandlung unterzogen wird, über den Schichtträger über der Schicht (20) aus druckempfindlichem Klebstoff geklebt ist, und
der Schichtträger einen Brechungsindex hat, der niedriger ist als ein Brechungsindex der Schicht (20) aus druckempfindlichem Klebstoff, und die Schicht (20) aus druckempfindlichem Klebstoff einen Brechungsindex hat, der niedriger ist als ein Brechungsindex des optischen Films (10, 12).

**9.** Hintergrundbeleuchtungssystem nach Anspruch 8, wobei der optische Film (10, 12) ein Laminat aus einer Vielzahl optischer Filme ist.

**10.** Hintergrundbeleuchtungssystem nach Anspruch 8 oder 9, wobei die Schicht (20) aus druckempfindlichem Klebstoff ein Speichermodul G' bei 23°C von 10.000 bis 1.000.000 Pa hat.

**11.** Hintergrundbeleuchtungssystem nach einem der Ansprüche 8 bis 10, wobei die Schicht (20) aus druckempfindlichem Klebstoff einen Brechungsindex von 1,50 oder mehr hat.

**12.** Bildanzeigevorrichtung, die das Hintergrundbeleuchtungssystem nach einem der Ansprüche 8 bis 11 umfasst.

**13.** Beleuchtungssystem, das das Hintergrundbeleuchtungssystem nach einem der Ansprüche 8 bis 11 umfasst.

**14.** Verfahren zum Herstellen des Hintergrundbeleuchtungssystems nach einem der Ansprüche 8 bis 11, wobei das Verfahren umfasst, dass der Schichtträger für austretendes Licht und der zum Vergrößern seiner Flächenausdehnung Präge- oder Aufrauhungsbearbeitungsbehandlung unterzogene optische Film (10, 12) über die Schicht (20) aus druckempfindlichem Klebstoff verbunden werden.

**15.** Methode zum Verbessern einer Helligkeit von austretendem Licht, wobei das Verfahren Einsatz des Hintergrundbeleuchtungssystems nach einem der Ansprüche 8 bis 11 umfasst.

## Revendications

**1.** Feuille optique avec un adhésif sensible à la pression, dans laquelle la feuille optique avec un adhésif sensible à la pression comprend un film optique (10, 12) soumis à un traitement de procédé consistant à bosseler ou à rendre rugueux afin d'augmenter sa surface spécifique, et une couche d'adhésif sensible à la pression (20) stratifiée sur la couche la plus externe du film optique, dans laquelle le film optique (10, 12) est au moins un d'une micro-lentille et d'une plaque diffusant la lumière, **caractérisée en ce que** la couche d'adhésif sensible à la pression (20) contient un polymère d'adhésif sensible à la pression présentant une fraction de gel de 35 à 85 % en masse, mesurée comme spécifié dans la description, et la couche d'adhésif sensible à la pression (20) est un polymère (méth)acrylique copolymérisé avec de 0,1 à 20 % en masse d'un monomère contenant de l'azote, de 0,1 à 5 % en masse d'un monomère contenant un groupe carboxyle, et de 0,1 à 10 % en masse d'un monomère contenant un groupe hydroxyle.

2. Feuille optique avec un adhésif sensible à la pression selon la revendication 1, dans laquelle la couche d'adhésif sensible à la pression (20) comprend une composition d'adhésif sensible à la pression comprenant de 10 à 150 parties en masse d'un agent collant présentant un cycle aromatique, et de 0,03 à 2 parties en masse d'un agent réticulant, rapporté à 100 parties en masse du polymère (méth)acrylique copolymérisé avec de 0,1 à 10 % en masse d'un monomère contenant un groupe hydroxyle.

3. Feuille optique avec un adhésif sensible à la pression selon la revendication 2, dans laquelle le polymère (méth)acrylique est un polymère (méth)acrylique modifié qui est obtenu en copolymérisant en plus un monomère d'indice de réfraction élevé au polymère (méth)acrylique copolymérisé avec de 0,1 à 10 % en masse du monomère contenant un groupe hydroxyle.

4. Feuille optique avec un adhésif sensible à la pression selon la revendication 2 ou 3, dans laquelle la composition d'adhésif sensible à la pression comprend de plus de 0,01 à 2 parties en masse d'un agent de couplage de silane rapporté à 100 parties en masse du polymère (méth)acrylique.

5. Feuille optique avec un adhésif sensible à la pression selon l'une quelconque des revendications 2 à 4, dans laquelle le polymère (méth)acrylique est un polymère (méth)acrylique copolymérisé avec de 50 à 99 % en masse de (méth)acrylate de n-butyle.

6. Feuille optique avec un adhésif sensible à la pression selon l'une quelconque des revendications 1 à 5, dans laquelle la couche d'adhésif sensible à la pression est une couche d'adhésif sensible à la pression (20) contenant des particules non colorées transmettant la lumière dispersées dans celle-ci pour présenter par-là des propriétés de diffusion de lumière.

7. Feuille optique avec un adhésif sensible à la pression selon l'une quelconque des revendications 1 à 6, dans laquelle la couche d'adhésif sensible à la pression (20) présente une épaisseur de 2 à 500 $\mu$m.

8. Système de rétro-éclairage comprenant :

   une surface à coller pour de la lumière sortante, dans lequel la surface à coller est une source de lumière (32), un élément de guide de lumière (30), ou une unité de source de lumière (3).
   une feuille optique selon l'une quelconque des revendications 1-7,
   dans lequel la surface à coller et le film optique (10,12) sont réunis par l'intermédiaire de la couche d'adhésif sensible à la pression (20),
   un côté opposé à un côté du film optique (10,12) soumis à un traitement de procédé consistant à bosseler ou à rendre rugueux est collé sur la surface à coller par l'intermédiaire de la couche d'adhésif sensible à la pression (20), et
   la surface à coller présente un indice de réfraction qui est inférieur à un indice de réfraction de la couche d'adhésif sensible à la pression (20), et la couche d'adhésif sensible à la pression (20) présente l'indice de réfraction qui est inférieur à un indice de réfraction du film optique (10, 12).

9. Système de rétro-éclairage selon la revendication 8, dans lequel le film optique (10, 12) est un stratifié de plusieurs films optiques.

10. Système de rétro-éclairage selon la revendication 8 ou 9, dans lequel la couche d'adhésif sensible à la pression (20) présente un module élastique de stockage à 23°C de 10 000 à 1 000 000 de Pa.

11. Système de rétro-éclairage selon l'une quelconque des revendications 8 à 10, dans lequel la couche d'adhésif sensible à la pression (20) présente un indice de réfraction de 1,50 ou supérieur.

12. Affichage d'image comprenant le système de rétro-éclairage selon l'une quelconque des revendications 8 à 11.

13. Système d'illumination comprenant le système de rétro-éclairage selon l'une quelconque des revendications 8 à 11.

**14.** Procédé de production du système de rétro-éclairage selon l'une quelconque des revendications 8 à 11, ledit procédé comprenant la réunion de la surface à coller pour de la lumière sortante et du film optique (10, 12) soumis à un traitement de procédé consistant à bosseler ou à rendre rugueux afin d'augmenter sa surface spécifique, par l'intermédiaire de la couche d'adhésif sensible à la pression (20).

**15.** Procédé d'amélioration d'une luminance de lumière sortante, ledit procédé comprenant l'utilisation du système de rétro-éclairage selon l'une quelconque des revendications 8 à 11.

*Fig. 1*

*Fig. 2*

*Fig. 3*

*Fig. 4*

*Fig. 5*

*Fig. 6*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006179494 A
- JP 11288614 A
- JP 10301109 A
- JP 11109344 A
- JP 11110131 A
- JP 11133419 A
- JP 2005044744 A

- JP 2005050654 A
- JP 2003202568 A
- JP 2001343529 A
- WO 0137007 A
- JP 2000347006 A
- JP 2007049883 A
- JP 2008025416 A

**Non-patent literature cited in the description**

- Catalog of Organic Peroxides. Yuki Kasankabutsu Catalog. Nippon Oils and Fats, Co., Ltd, May 2003